# EUROPEAN PATENT APPLICATION

(11) **EP 4 528 243 A1**
(43) Date of publication of application: **26.03.2025**
(21) Application number: 24202356.2
(22) Date of filing: 24.09.2024
(51) Int. Cl.: G01L 13/02, G01L 15/00

(54) **DIFFERENTIAL PRESSURE SENSORS FOR DYNAMIC, HIGH PRESSURE, HYDRAULIC SYSTEMS**

(30) Priority: 25.09.2023 US 202363540198 P; 23.09.2024 US 202418893071
(71) Applicant: Illinois Tool Works Inc., Glenview IL 60025 (US)
(72) Inventor: MEYER, Richard Alan, Glenview 60025 (US); PANKRATZ, David Allen, Glenview, 60025 (US); BONNER, Dustin X., Glenview, 60025 (US); ROGOTZKE, Riley August, Glenview 60025 (US)
(74) Representative: HGF

(57) **Abstract**

Described herein are examples of differential pressure sensors designed to work with dynamic, high pressure, hydraulic systems. The sensors have a one piece sensor housing that is durable enough to withstand intense fluid pressures and associated stresses. Additionally, the sensors use foil (rather than, for example, piezoelectric) strain gauges to enable pressure measurement even under the unique stresses imposed by dynamic, high pressure, hydraulic systems. Furthermore, the sensor tubes of the sensor help to isolate the strain gauges from some of the bowing/bending stresses that the main body of the sensor may experience due to the intense fluid pressures.

## Description

### CROSS REFERENCE TO RELATED APPLICATIONS

This application claims priority to, and the benefit of, U.S. Provisional Patent Application No. 63/540,198, filed September 25, 2023, entitled "Differential Pressure Sensors for Dynamic, High Pressure, Hydraulic Systems," the entire contents of which are hereby incorporated by reference.

### TECHNICAL FIELD

The present disclosure generally relates to differential pressure sensors, and, particularly to differential pressures sensors for dynamic, high pressure, hydraulic systems.

### BACKGROUND

Pressure sensors measure a pressure of a fluid (e.g., air, gas, liquid, etc.). Differential pressure sensors measure a difference between two fluid pressures. Such sensors may be used in hydraulic systems to measure hydraulic pressures.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to differential pressure sensors for dynamic, high pressure, hydraulic systems, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIG. 1 shows an example hydraulic system, in accordance with aspects of this disclosure.
FIG. 2 shows a perspective view of an example differential pressure sensor that might be used in the example hydraulic system of FIG. 1, in accordance with aspects of this disclosure.
FIG. 3 shows a perspective view of a sensor cover of the differential pressure sensor of FIG. 2, in accordance with aspects of this disclosure.
FIGS. 4a-4i show different views of a sensor housing of the differential pressure sensor of FIG. 2, in accordance with aspects of this disclosure.
FIGS. 5a-5d show different views of an example first alternative sensor housing that might be used in the differential pressure sensor of FIG. 2, in accordance with aspects of this disclosure.
FIGS. 6a-6c show different views of an example second alternative sensor housing that might be used in the differential pressure sensor of FIG. 2, in accordance with aspects of this disclosure.
FIGS. 7a-7c show different views of an example third alternative sensor housing that might be used in the differential pressure sensor of FIG. 2, in accordance with aspects of this disclosure.
FIGS. 8a-8c show different views of an example fourth alternative sensor housing that might be used in the differential pressure sensor of FIG. 2, in accordance with aspects of this disclosure.
FIGS. 9a-9b show example sensor circuits that might be used in the differential pressure sensor of FIG. 2, in accordance with aspects of this disclosure.
FIGS. 10 shows a perspective view of an example adapter that might be used with differential pressure sensor of FIG. 2, in accordance with aspects of this disclosure.
FIGS. 11a-11e show different view of the adapter of FIG. 10 attached to the sensor housing of FIGS. 4a-4f, in accordance with aspects of this disclosure.
FIG. 12 shows a perspective view of the differential pressure sensor of FIG. 2 attached to the sensor cover of FIG. 10, in accordance with aspects of this disclosure.
FIGS. 13a-13b show cross-sectional views of a fifth alternative sensor housing that might be used in the differential pressure sensor of FIG. 2, in accordance with aspects of this disclosure.
FIG. 14 shows an example of an alternative differential pressure sensor and alternative adapter that might be used in the example hydraulic system of FIG. 1, in accordance with aspects of this disclosure.
FIG. 15 shows an example of an alternative cover of the alternative differential pressure sensor of FIG. 14, in accordance with aspects of this disclosure.
FIGS. 16a-16d show different views of the alternative adapter shown in FIG. 14, in accordance with aspects of this disclosure.
FIGS. 17a-17d shows different views of an example sixth alternative sensor housing that might be used in the example alternative differential pressure sensor of FIG. 14, in accordance with aspects of this disclosure.
FIG. 18 shows an example alternative sensor circuit that might be used in the example alternative differential pressure sensor of FIGS. 14a-14b, in accordance with aspects of this disclosure.

The figures are not necessarily to scale. Where appropriate, the same or similar reference numerals are used in the figures to refer to similar or identical elements. For example, reference numerals utilizing lettering (e.g., diaphragm 424a, diaphragm 424b) refer to instances of the same reference numeral that does not have the lettering (e.g., diaphragms 424).

### DETAILED DESCRIPTION

Some examples of the present disclosure relate to differential pressure sensors for use in dynamic, high pressure, hydraulic systems. Dynamic, high pressure, hydraulic systems can generate substantial heat and pressure during normal operation, and even higher pressure spikes can occur at certain points. The heat and pressure can subject components of the hydraulic system to substantial stress and/or fatigue that can lead to component failure if the component is not properly designed to withstand these stresses.

The differential pressure sensors disclosed herein are specifically designed to withstand the high heat, pressures, stresses, and/or fatigue of dynamic, high pressure, hydraulic systems. For example, the disclosed differential pressure sensors have a one piece metal sensor housing that is durable enough to withstand intense fluid pressures and associated stresses. As another example, the disclosed differential pressures sensors use foil strain gauges that are able to withstand intense stresses, rather than, for example, piezoelectric elements which may be more fragile. Furthermore, the disclosed differential pressures sensors include sensor tubes that help to isolate the diaphragms and strain gauges from some of the bowing/bending stresses that the main body of the sensor may experience due to the intense fluid pressures.

Some examples of the present disclosure relate to a differential pressure sensor, comprising: a sensor housing, the sensor housing comprising a first input port and a second input port; a first sensor tube connected to the sensor housing at a first tube housing end, the first sensor tube extending from the first tube housing end to a first conduit end that is isolated from the sensor housing; a second sensor tube connected to the sensor housing at a second tube housing end, the second sensor tube extending from the second tube housing end to a second conduit end that is isolated from the sensor housing; a first fluid conduit extending from the first input port, through the sensor housing and the first sensor tube, to the first conduit end, the first sensor tube being configured to experience a first deflection in response to a first fluid pressure within the first fluid conduit; a second fluid conduit extending from the second input port, through the sensor housing and the second sensor tube, to the second conduit end, the second sensor tube being configured to experience a second deflection in response to a second fluid pressure within the second fluid conduit; a first circuit element bonded to the first sensor tube, the first circuit element having a first electrical characteristic that is dependent upon the first deflection of the first sensor tube; a second circuit element bonded to the second sensor tube, the second circuit element having a second electrical characteristic that is dependent upon the second deflection of the second sensor tube; and a sensing circuit electrically connected to the first circuit element and the second circuit element, the sensing circuit being configured to determine a pressure differential between the first fluid pressure within the first fluid conduit and the second fluid pressure within the second fluid conduit based on the first electrical characteristic of the first circuit element and the second electrical characteristic of the second circuit element.

In some examples, the sensor housing further comprises a first housing end and a second housing end opposite the first housing end, the first housing end comprising the first input port and the second input port, and the second housing connecting to the first sensor tube or second sensor tube at the first tube housing end or the second tube housing end. In some examples, the first sensor tube or the second sensor tube is recessed within the sensor housing, such that the sensor housing encircles the first sensor tube or the second sensor tube. In some examples, the sensor housing is comprised of a metal material.

In some examples, the sensor housing further comprises: a first groove encircling a first portion of the first sensor tube, such that the first portion of the first sensor tube is isolated from the sensor housing, and a second groove encircling a second portion of the second sensor tube, such that the second portion of the second sensor tube is isolated from the sensor housing. In some examples, the first circuit element comprises a first resistor, the second circuit element comprises a second resistor, the first electrical characteristic comprises a first resistance, and the second electrical characteristic comprises a second resistance. In some examples, the first circuit element comprises a first strain gauge and the second circuit element comprises a second strain gauge.

In some examples, the first strain gauge and the second strain gauge are comprised of foil. In some examples, the sensor housing, the first sensor tube, and the second sensor tube comprise a single continuous machined piece of metal. In some examples, the first sensor tube comprises a first inner sensor tube wall within the first fluid conduit, and a first outer sensor tube portion outside the first fluid conduit, the second sensor tube comprises a second inner sensor tube portion within the second fluid conduit, and a second outer sensor tube portion outside the second fluid conduit, the first circuit element is bonded to the first outer sensor tube portion, and the second circuit element is bonded to the second outer sensor tube portion.

Some examples of the present disclosure relate to a hydraulic system, comprising: a hydraulic device comprising a device housing enclosing a first fluid volume separated from a second fluid volume; and a differential pressure sensor comprising: a sensor housing comprised of a metal material, the sensor housing comprising a first input port in fluid communication with the first fluid volume and a second input port in fluid communication with the second fluid volume, a first sensor tube connected to the sensor housing at a first tube housing end, the first sensor tube extending from the first tube housing end to a first conduit end that is isolated from the sensor housing, a second sensor tube connected to the sensor housing at a second tube housing end, the second sensor tube extending from the second tube housing end to a second conduit end that is isolated from the sensor housing, a first fluid conduit extending from the first input port, through the sensor housing and the first sensor tube, to the first conduit end, the first sensor tube being configured to experience a first deflection in response to a first fluid pressure within the first fluid conduit, a second fluid conduit extending from the second input port, through the sensor housing and the second sensor tube, to the second conduit end, the second sensor tube being configured to experience a second deflection in response to a second fluid pressure within the second fluid conduit, a first circuit element bonded to the first sensor tube, the first circuit element having a first electrical characteristic that is dependent upon the first deflection of the first sensor tube, a second circuit element bonded to the second sensor tube, the second circuit element having a second electrical characteristic that is dependent upon the second deflection of the second sensor tube, and a sensing circuit electrically connected to the first circuit element and the second circuit element, the sensing circuit being configured to determine a pressure differential between fluid in the first fluid volume of the hydraulic device and fluid in the second fluid volume of the hydraulic device based on the first electrical characteristic of the first circuit element and the second electrical characteristic of the second circuit element.

In some examples, the sensor housing further comprises a first housing end and a second housing end opposite the first housing end, the first housing end comprising the first input port and the second input port, and the second housing connecting to the first sensor tube or second sensor tube at the first tube housing end or the second tube housing end. In some examples, the first sensor tube or the second sensor tube is recessed within the sensor housing, such that the sensor housing encircles the first sensor tube or the second sensor tube. In some examples, the sensor housing is comprised of a metal material.

In some examples, the sensor housing further comprises: a first groove encircling a first portion of the first sensor tube, such that the first portion of the first sensor tube is isolated from the sensor housing, and a second groove encircling a second portion of the second sensor tube, such that the second portion of the second sensor tube is isolated from the sensor housing. In some examples, the first circuit element comprises a first resistor, the second circuit element comprises a second resistor, the first electrical characteristic comprises a first resistance, and the second electrical characteristic comprises a second resistance. In some examples, the first circuit element comprises a first strain gauge and the second circuit element comprises a second strain gauge.

In some examples, the first strain gauge and the second strain gauge are comprised of foil. In some examples, the sensor housing, the first sensor tube, and the second sensor tube comprise a single continuous machined piece of metal. In some examples, the first sensor tube comprises a first inner sensor tube portion within the first fluid conduit, and a first outer sensor tube portion outside the first fluid conduit, the second sensor tube comprises a second inner sensor tube portion within the second fluid conduit, and a second outer sensor tube portion outside the second fluid conduit, the first circuit element is bonded to the first outer sensor tube portion, and the second circuit element is bonded to the second outer sensor tube portion.

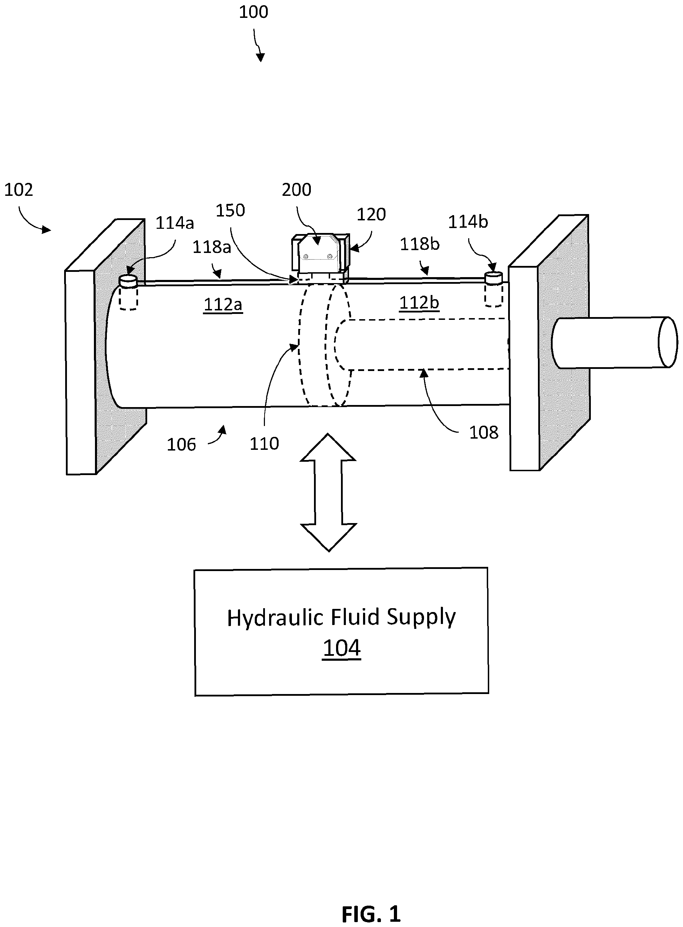

FIG. 1 shows an example of a hydraulic system 100. In the example of FIG. 1, the hydraulic system 100 includes a hydraulic actuator 102 and a hydraulic fluid supply 104 in fluid communication with the hydraulic actuator 102. In some examples, the hydraulic fluid supply 104 may include one or more hydraulic pumps and/or fluid tanks configured to circulate hydraulic fluid through the hydraulic actuator 102 of the hydraulic system 100.

In the example of FIG. 1, the hydraulic actuator 102 includes an actuator housing 106. Within the actuator housing 106 is positioned a hydraulic piston 108. A piston seal 110 of the hydraulic piston 108 is enclosed within the actuator housing 106 at the end of the hydraulic piston 108.

As shown, the piston seal 108 divides the internal volume of the actuator housing 106 into two sections 112. Hydraulic fluid pressures within the internal volume of the actuator housing 106 may act upon the piston seal 110, and thereby move the hydraulic piston 108 (e.g., back and forth). More particularly, a pressure differential across the piston seal 110 (and/or a difference between the pressure in section 112a and section 112b) may cause movement of the hydraulic piston 108.

Thus, for example, if the hydraulic pressure in the internal volume of the first section 112a of the actuator housing 106 is greater or less than the hydraulic pressure in the second section 112b of the actuator housing 106, the difference in hydraulic pressure may induce movement of the piston 108. On the other hand, if the hydraulic pressure in the first section 112a is equal to the hydraulic pressure in the second section 112b the piston 108 may be held stationary.

In the example of FIG. 1, the actuator housing 106 includes fluid ports 114 in fluid communication with the inner volume sections 112 of the actuator housing 106. The fluid ports 114 are in turn shown in fluid communication with a manifold 150 via fluid lines 118. Fluid lines internal to the manifold 150 connect to a differential pressure sensor 200, thereby bringing the differential pressure sensor 200 in fluid communication with the inner volume sections 112 of the actuator housing 106.

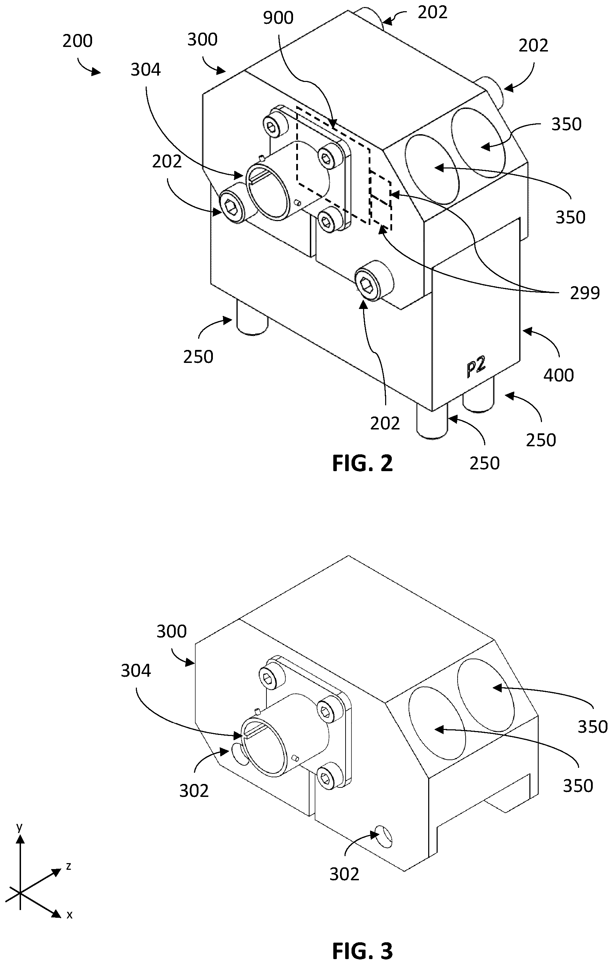

The differential pressure sensor 200 is secured to the manifold 150 via manifold fasteners 250 (see, e.g., FIG. 2). In the example of FIG. 1, the differential pressure sensor 200 is electrically connected with an actuator controller 120 of the hydraulic actuator 102. In some examples, the differential pressure sensor 200 may output one or more electric signals representative of the pressure differential between the inner volume sections 112 of the hydraulic actuator 102. In some examples, the actuator controller 120 may use the signal(s) from the differential pressure sensor 200 (and/or the pressure differential measured by the differential pressure sensor 200) to control the hydraulic actuator 102 (and/or other portions of the hydraulic system 100).

Though it may be theoretically possible to use two individual pressure sensors and connecting circuitry in place of the differential pressure sensor 200, there are many advantages to using the differential pressure sensor 200 rather than two individual pressure sensors. For example, the differential pressure sensor 200 is generally smaller and more compact than would be two individual pressure sensors and connecting circuitry. Additionally, a differential pressure sensor 200 need not be as sensitive and/or responsive as an individual pressure sensor (e.g., since a differential pressure sensor 200 is only measuring a pressure difference rather than actual pressure). Furthermore, many legacy (e.g., hydraulic) systems have historically used differential pressure sensors, and it is much simpler, cost effective, and/or efficient to continue to use a differential pressure sensor 200 with the system than modify or retrofit the system to work with individual pressure sensors.

While shown as including a hydraulic actuator 102 in the example of FIG. 1, in some examples, the hydraulic system 100 may include one or more additional, and/or alternative, hydraulic devices. In some examples, the hydraulic system 100 may be part of a larger system that tests various structures and/or machines (e.g., buildings, bridges, airplanes, trains, automobiles, ships, turbines, oil rigs, etc.). For example, the hydraulic system 100 may be used to test the reliability, durability, flexibility, balance, strength, and/or other aspects of the various structures and/or machines. In doing so, the hydraulic actuator 102, and/or the differential pressure sensor 200, may be subjected to dynamic hydraulic pressures up to 5000 pounds per square inch (psi), with possible pressure spikes of up to 15,000 psi.

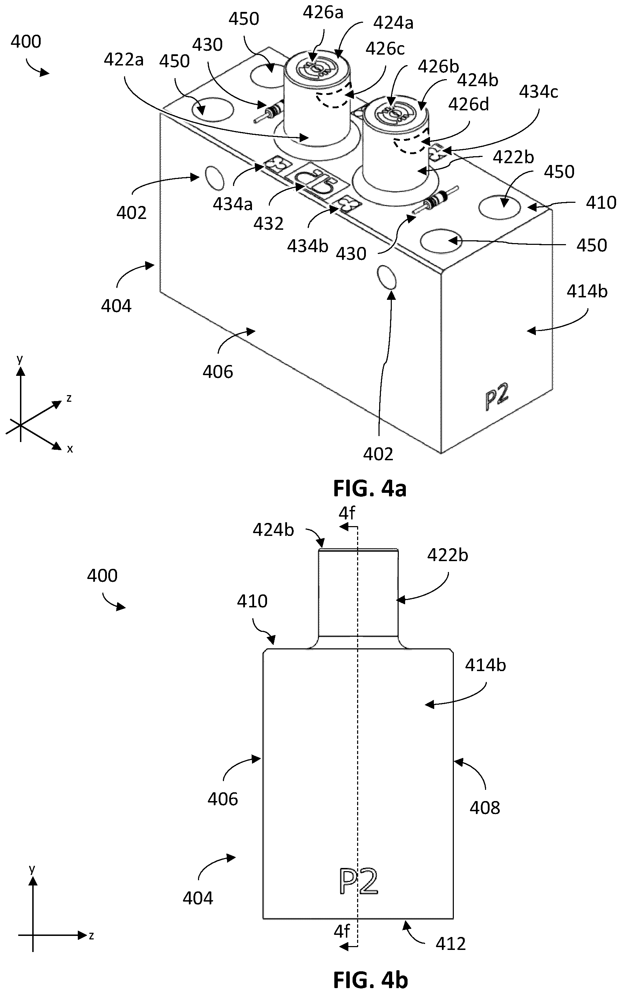

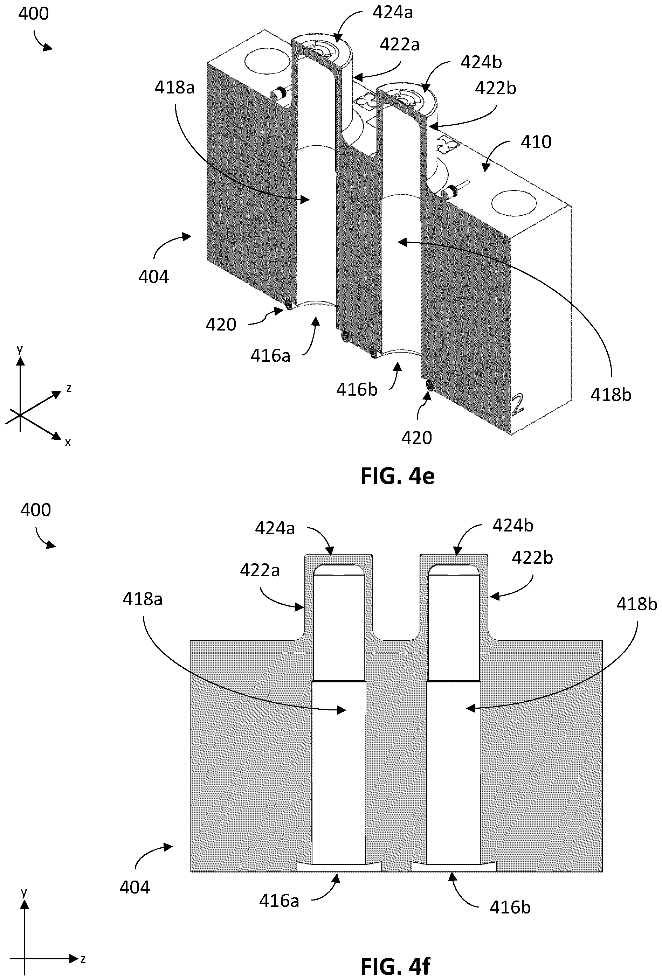

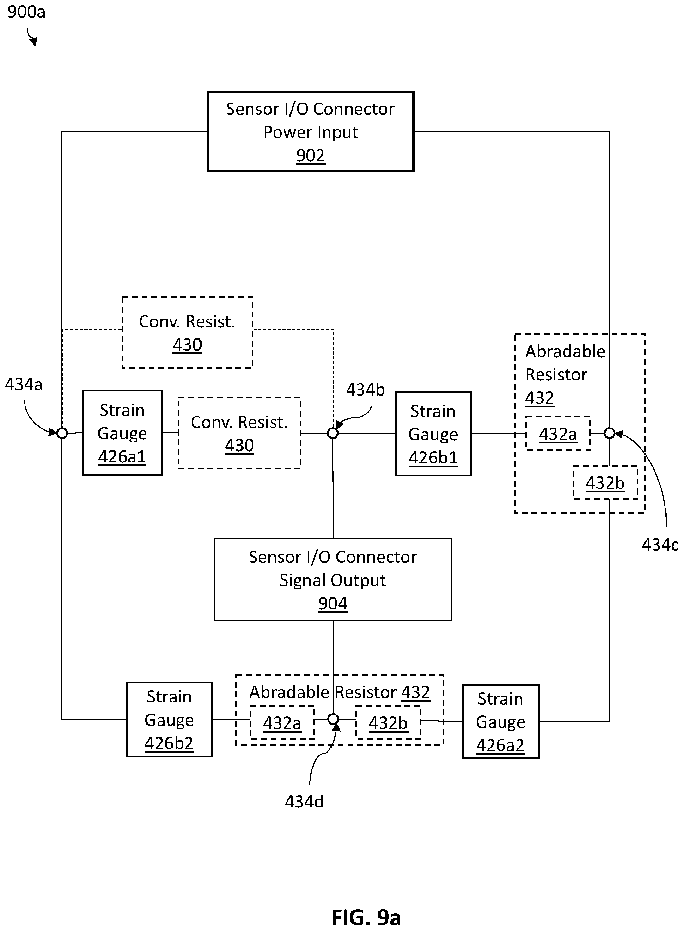

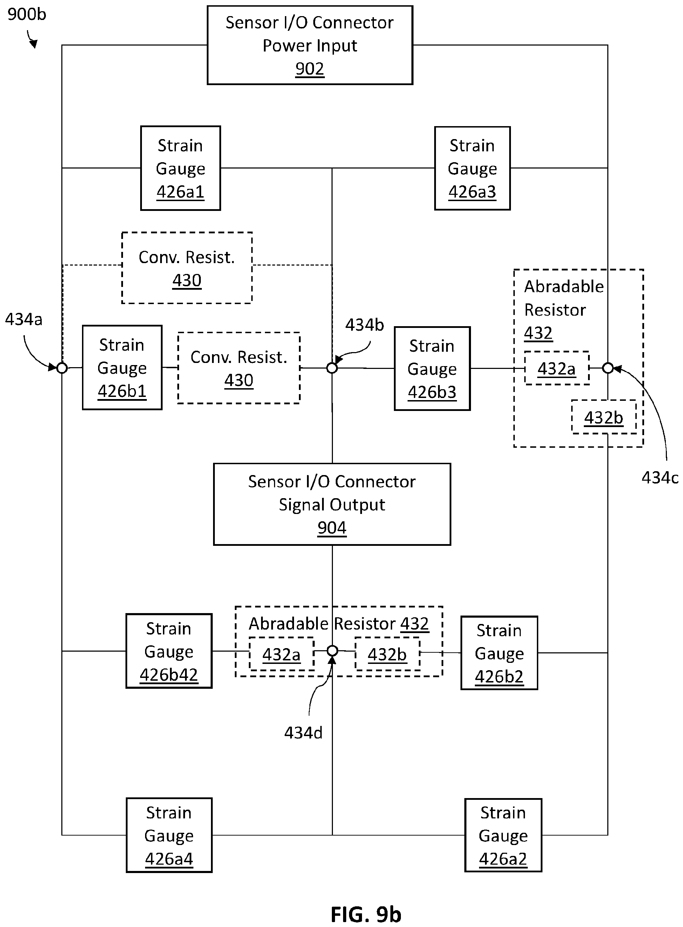

FIG. 2 show an enlarged perspective view of the example differential pressure sensor 200. In the example of FIG. 2, the differential pressure sensor 200 includes a sensor cover 300 attached over the top of a sensor housing 400, thereby enclosing between the sensor cover 300 and sensor housing 400 a sensing circuit 900 (further discussed below with respect to FIG. 9). As shown, the sensor cover 300 is attached to the sensor housing 400 using cover fasteners 202 inserted through aligned cover fastener holes 302/402 in the sensor cover 300 and sensor housing 400 (see also, e.g., FIGS. 3 and 4a). Manifold fasteners 250 are shown extending through the sensor cover 300 and sensor housing 400 for fastening the differential pressure sensor 200 to the manifold 150. The sensor cover 300 further includes manifold fastener channels 350 (e.g., sealed off from the inside of the sensor cover 300) through which the manifold fasteners 250 may be inserted into the sensor housing 400 and/or manifold 150.

In the example of FIGS. 2-4, the sensor cover 300 further includes a sensor input/output (I/O) connector 304. Though obscured due to the perspective of the figures, the sensor I/O connector 304 includes several electrically conductive pins, through which the sensor I/O connector 304 may be electrically connected to other devices (e.g., the actuator controller 120). In some examples, the differential pressure sensor 200 may output a signal representative of the measured differential pressure via the (e.g., pins of the) sensing I/O connector 304. In some examples, the differential pressure sensor 200 may receive electrical power (e.g., to power its circuitry) via the (e.g., pins of the) sensing I/O connector 304.

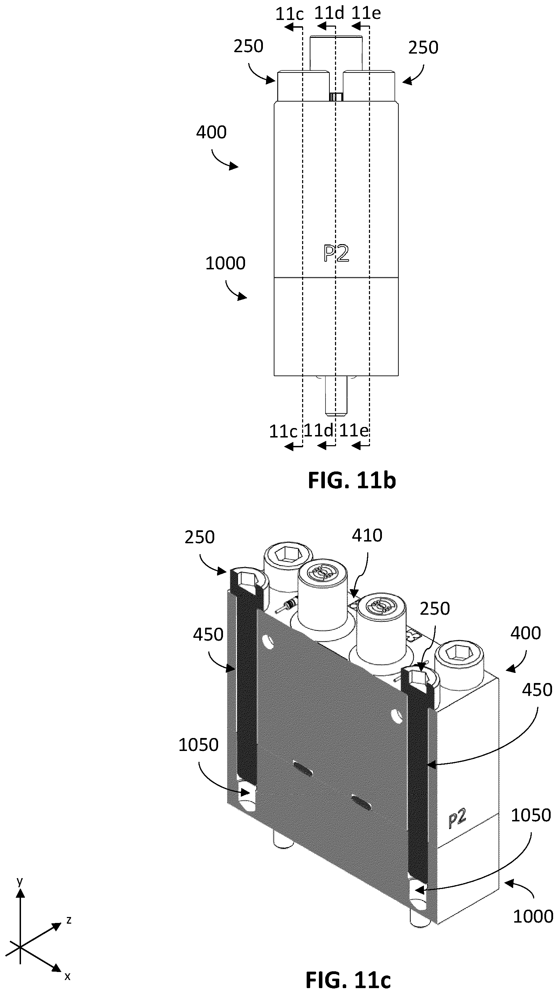

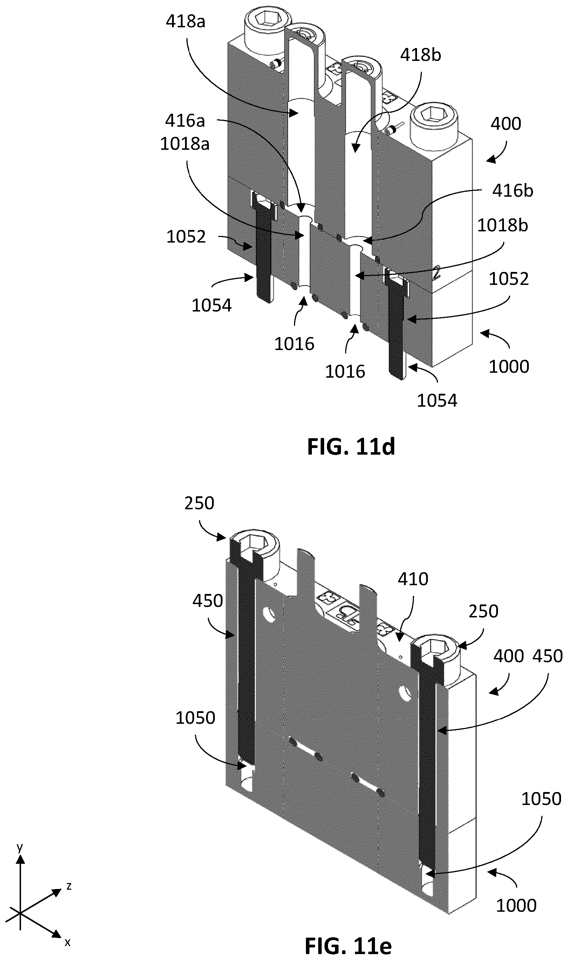

FIGS. 4a-4f show example views of the sensor housing 400 of the differential pressure sensor 200 with the sensor cover 300 and manifold fasteners 250 removed. As shown, the sensor housing 400 includes a cubical main body 404 having a front wall 406, rear wall 408, top wall 410, bottom wall 412, and sidewalls 414. Manifold fastener conduits 450 extend through the sensor housing 400 from the top wall 410 to the bottom wall 412 (see, e.g., FIG. 11c and 11e).

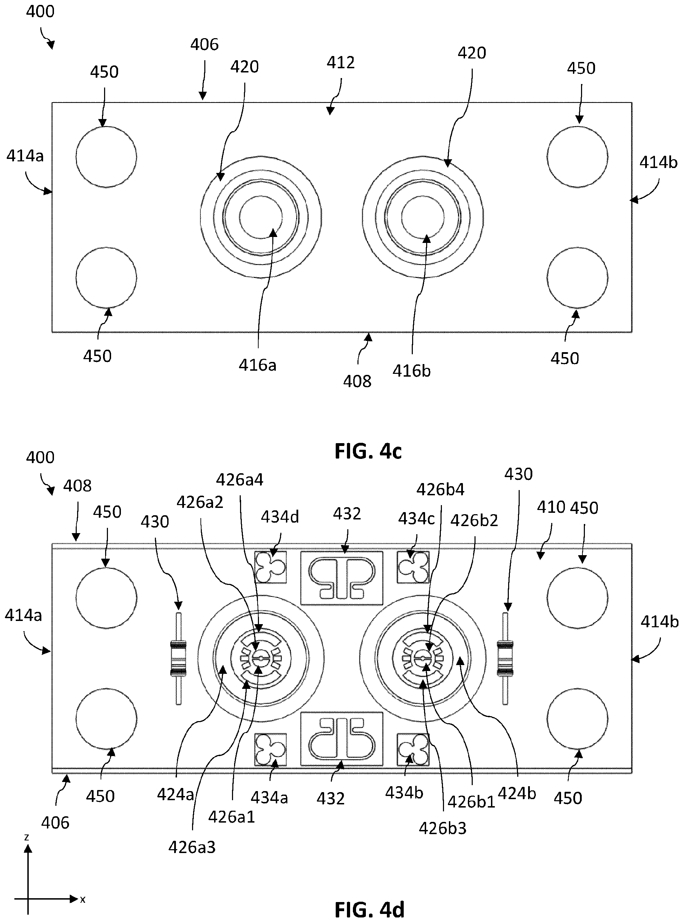

In the examples of FIGS. 4c and 4e-4f, the bottom wall 412 of the sensor housing 400 has two circular input ports 416. In some examples, one or more of the input ports 416 may alternatively, or additionally, be positioned in, on, and/or at the front wall 406, the rear wall 408, and/or the sidewalls 414. As shown, the input ports 416 lead to fluid conduits 418 that extend through the sensor housing 400 from the bottom wall 412 to the top wall 410. As shown, each fluid conduit 418 is approximately cylindrical (e.g., where all the points on the walls of the fluid conduit 418 are equidistant from a central axis of the fluid conduit 418, along a plane approximately perpendicular to the central axis, within 5% of the mean, mode, or average distance from the central axis along the perpendicular plane).

In some examples, each input port 416 of the sensor housing 400 may connect to a different fluid line 118 within the manifold 150 when the differential pressure sensor 200 is used in the hydraulic system 100 shown in FIG. 1. Thus, each input port 416 and/or fluid conduit 418 of the sensor housing 400 may be in fluid communication with a different inner volume section 112 of the actuator housing 106 when the differential pressure sensor 200 is used in the hydraulic system 100 shown in FIG. 1.

In the examples of FIGS. 4c and 4e, each input port 416 includes an annular groove in which is fitted an O-ring 420. In some examples the O-rings 420 may serve to seal the input ports 416 and/or fluid conduits 418 when connected to the manifold 150. In examples where one or more of the input ports 416 may alternatively, or additionally, be positioned in, on, and/or at the front wall 406, the rear wall 408, and/or the sidewalls 414, a screw fit connection may alternatively, or additionally, be used. In examples where two input ports 416 lead and/or connect to the same fluid conduit 418, a port seal may be used to seal off one of the input ports 416when not in use.

In the examples of FIGS. 4e-4f, the fluid conduits 418 extend through the sensor housing 400 and into two approximately cylindrical sensor tubes 422 connected to the top wall 410 of the sensor housing 400. In some examples, the cylindrical shape of the sensor tubes 422 may be more durable than a polygonal shape, due to the reduced number of edges and/or corners, which may rupture under pressure. Additionally, polygonal (and/or square holes) may be more difficult and/or expensive to machine.

As shown, each sensor tube 422 extends approximately perpendicular (e.g., within 5 degrees of 90 degrees) to the top wall 410, with the two sensor tubes 422 extending approximately parallel (e.g., within 5 degrees of 0/180) to one another. The height (e.g., in the y axis) of each sensor tube 422 (e.g., beginning at the top wall 410) is shown as being approximately (e.g., within 5% of) a third of the height (e.g., in the y axis) of the main body 404 of the sensor housing 400. Each sensor tube 422 (and/or fluid conduit 418) is shown as terminating at a sensor diaphragm 424.

In the examples of FIGS. 4a-4f, each sensor diaphragm 424 closes off the end of a sensor tube 422 (and/or fluid conduit 418). As shown, each sensor diaphragm 424 is approximately circular (e.g., where all the points on the perimeter of the diaphragm 424 are equidistant from a central point within 5% of the mean, mode, or average distance from the central point). Each sensor diaphragm 424 is further shown as having a width (e.g., in the y direction) that is about as thick as the width of the sidewalls of the sensor tube 422 to which the diaphragm is attached. In some examples, the relative thin width of the diaphragm 424 allows for the fluid pressure of the hydraulic fluid in the fluid conduit 418 to force (e.g., a middle portion of) the diaphragm 424 to deflect, distend, deform, and/or bend outwards (e.g., in the y direction).

In the examples of FIGS. 4a and 4d, the differential pressure sensor 200 further includes strain gauges 426 attached, fastened, adhered, and/or otherwise bonded to the diaphragms 424. As shown in FIG. 4d, four strain gauges 426 are shown bonded to each diaphragm 424. Each strain gauge 426 is shown bonded to an outer face of a diaphragm 424 that is outside of the fluid conduit 418 and/or sensor tube 422, as well as opposite an inner face of the diaphragm 424 positioned within the fluid conduit 418 and/or sensor tube 422. In some examples, when so positioned on the diaphragm 434, the inner/middle strain gauges 426a1, 426a2, 426b1, and 426b2 may respond to and/or measure circumferential and/or hoop strain, while the outer strain gauges 426a3, 426a4, 426b3, and 426b4 may respond to and/or measure radial strain. In some examples, the differential pressure sensor 200 may primarily use the strain gauges 426a1, 426a2, 426b1, and 426b2 bonded to the middle portion of the diaphragm 400 for pressure detection.

In some examples, strain gauges 426 may additionally, or alternatively, be bonded to the outer faces of the sensor tubes 422 (e.g., proximate the diaphragm(s) 424). This situation is shown, for example, by the dotted line strain gauges 426c and 426d on the outer faces of the sensor tubes 422 in FIG. 4a. In some examples, when the strain gauges 426 are positioned on the outer faces the of the sensor tubes 422, the differential pressure sensor 400 may rely more on the outer (rather than inner) strain gauges 426. In some examples, when the strain gauges 426 are positioned on the outer faces the of the sensor tubes 422, the strain gauges 426c and 426d may respond to hoop stress placed on the sensor tubes 422.

In some examples, each strain gauge 426 may comprise a foil material whose electrical resistance (and/or impedance) varies with applied force. For example, the resistance of a strain gauge 426 may increase as the strain gauge 426 is stretched. As each strain gauge 426 is bonded to a diaphragm 424, the strain gauge 426 will stretch as the diaphragm 424 stretches (and/or deflects, deforms, distends, etc.), such as may occur in response to fluid pressure from fluid within the fluid conduit 418. In particular, the strain gauges 426a1, 426a2, 426b1, and 426b2 bonded to the middle portion of the diaphragm 400 will stretch as the diaphragm 424 stretches. In this configuration, the resistance (and/or impedance) of each strain gauge 426 is dependent upon the extent to which its diaphragm 424 stretches (and/or deflects, deforms, distends, etc.).

In some examples, foil strain gauges 426 are used in the differential pressure sensor 200 because foil strain gauges 426 are more resilient and/or able to withstand higher stresses. This is in contrast to, for example, piezoelectric elements that are more fragile and therefore more susceptible to breakage under the high temperatures and/or stresses of the hydraulic system 100. The strain gauges 426 are further bonded to the outer face of the diaphragm 424 so that the strain gauges 426 are protected from direct contact with the hot, pressurized, hydraulic fluid.

The bonding of the strain gauges 426 to the outer face of the diaphragm 424 in conjunction with the direct connection between the input ports 416 and the diaphragms 424 on which the strain gauges 426 are bonded (e.g., with no intervening oil or intermediate diaphragms) is also advantageous. For example, this configuration means that a mechanical tool may be inserted through an input port 416 and fluid conduit 418 to mechanically modify the width of a diaphragm 424, even after the strain gauge 426 is bonded to the diaphragm 424. In some examples, modifying the width of a diaphragm 424 may make the diaphragm 424 more susceptible to deflection (and/or distention, deformation, etc.) in response to fluid pressure.

In some examples, it may be desirable for a particular diaphragm 424 to be more susceptible to deflection (and/or distention, deformation, etc.) in response to fluid pressure. For example, it may be desirable to make one diaphragm 424 more sensitive and/or responsive than the other, such as in hydraulic systems where some pressure differential is the steady state condition. In such an example, one diaphragm 424 may be made thinner than the other (and thus, more sensitive/responsive and/or susceptible to deflection), such that the sensor 200 outputs a pressure differential (and/or representative signal value) of zero when there is some pressure imbalance (e.g., the steady state pressure imbalance).

In some examples, the sensor tubes 422 may be considered part of the sensor housing 400. In some examples, the main body 404 of the sensor housing 400, the sensor tubes 422, and the diaphragms 424 may comprise one solid and continuous machined piece of (e.g., steel and/or other metal) material, with no welded connections. In some examples, this one piece design may help the sensor 200 to better withstand the high pressures and/or stresses of the hydraulic system 100, as opposed to welded designs which might be more susceptible to failure along weld seems under high pressures and/or stresses.

While the one piece design of the sensor housing 400 may prevent tearing, rupture, and/or failure along weld seams of the sensor housing 400, the main body 404 of the sensor housing 400 may still bending and/or bulging stress due to the high pressures of the hydraulic fluid. In particular, the pressurized hydraulic fluid may exert upward (e.g., in the y direction) and/or outward (e.g., in the x and/or z directions) forces against the sensor housing 400 when within the fluid conduits 418 of the sensor housing 400. As the sensor housing 400 will be fastened to the manifold 150 when experiencing the upward and outward forces, the sensor housing 400 may experience some bending upward bending and/or outward bulging.

In some examples, placing the diaphragms 424 and/or strain gauges 426 at the end of sensor tubes 422 that extend away from the main body 404 of the sensor housing 400 may isolate the diaphragms 424 and/or strain gauges 426 from most of the outward bulging effects experienced by the sensor housing 400. This can be important, as such bulging of the sensor tubes 422 near the diaphragm 424 may impact the (e.g., resistance of the) strain gauges 426 in such a way that distorts the measurements and/or outputs of the sensor 200.

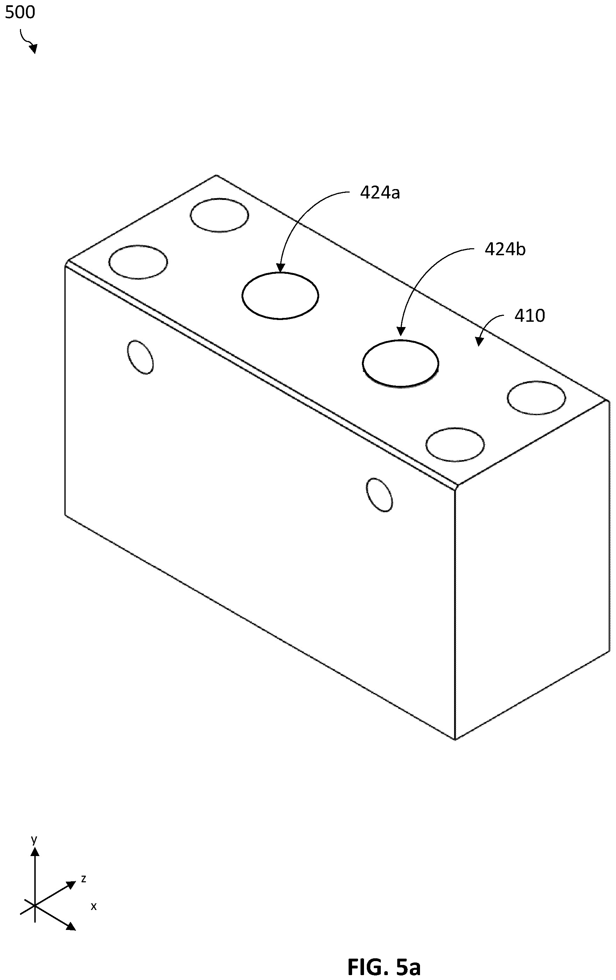

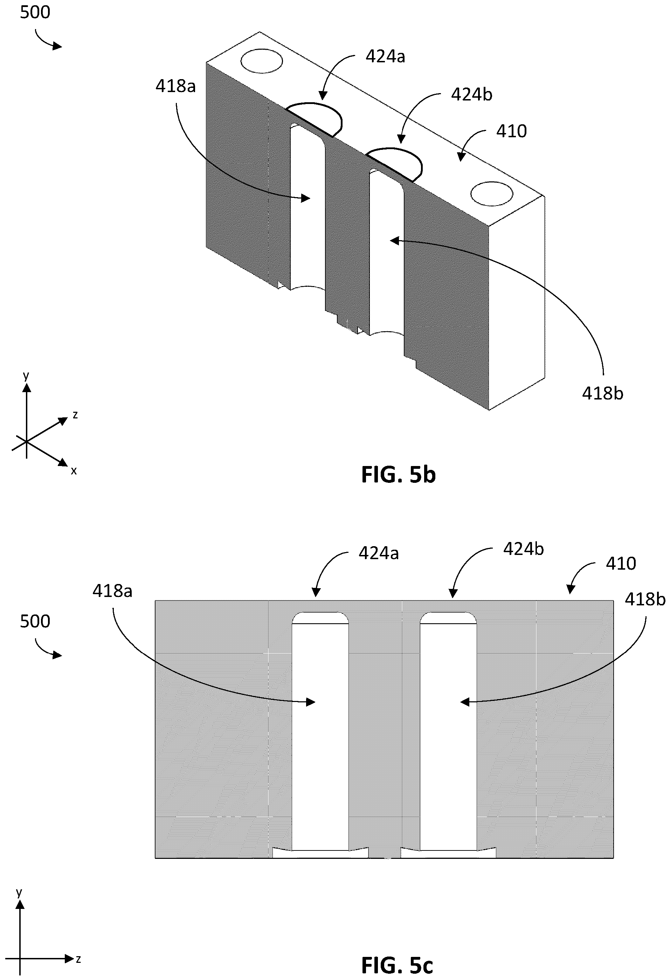

FIGS. 5a-5c show examples of a first alternative sensor housing 500 that may be used with the differential pressure sensor 200. The first alternative sensor housing 500 is similar (and/or identical) to the sensor housing 400 of FIGS. 4a-4f, except that the first alternative sensor housing 500 lacks sensor tubes 422. Rather than diaphragms 424 positioned at the end of sensor tubes 422 (and/or fluid conduits 418) that extend beyond the top wall 410, the fluid conduits 418 extend only as far as the top wall 410, and the diaphragms 424 form part of, and/or are approximately coplanar with the top wall 410. As discussed above, the configuration of the first alternative sensor housing 500 may result in bulging of the sensor housing 400 proximate the diaphragms 424, which may impact the (e.g., resistance of the) strain gauges 426 in such a way that distorts the measurements and/or outputs of the sensor 200.

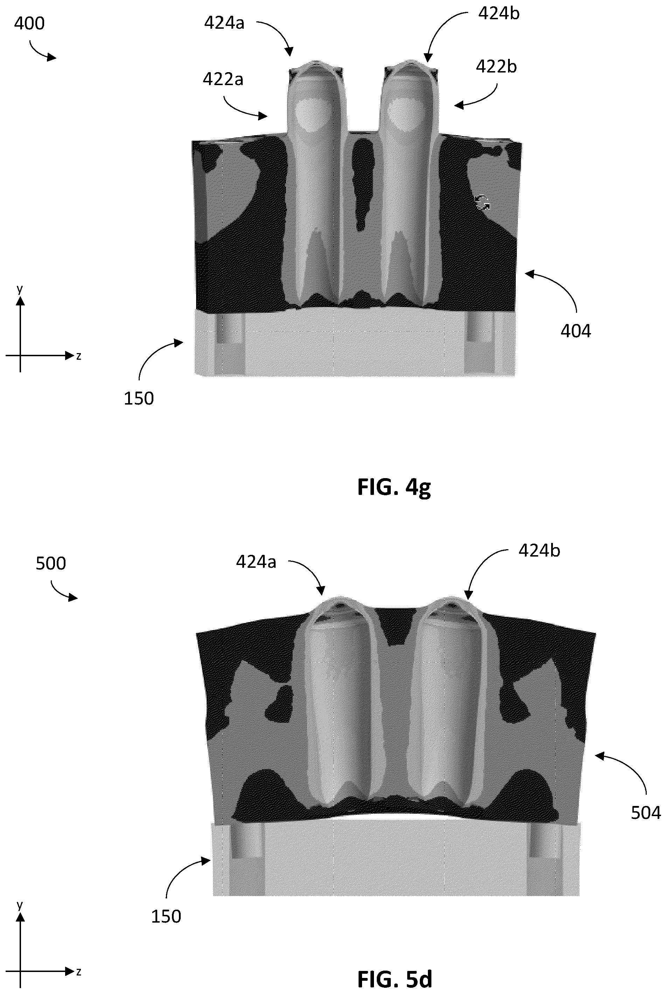

FIGS. 4g and 5d show exaggerated examples of how the sensor housing 400 and first alternative sensor housing 500 might experience the upward (e.g., in the y direction) and/or outward (e.g., in the x and/or z direction) bending fluid pressure stresses. As shown, the main body 404/504 of each of the sensor housing 400 and first alternative sensor housing 500 experiences some bending in the y direction, such that each main body 404/504 is slightly bowed. Because the diaphragms 424 are part of the main body 504 in the first alternative sensor housing 500 of FIG. 5d, the diaphragms 424 also experience this bending, which may distort the measurements of the associated strain gauges 426. In contrast, the use of sensor tubes 422 in the sensor housing 400 of FIG. 4g allow for the diaphragms 424 to be isolated from the main body 404, such that the diaphragms 424 experience significantly less of the bending stress.

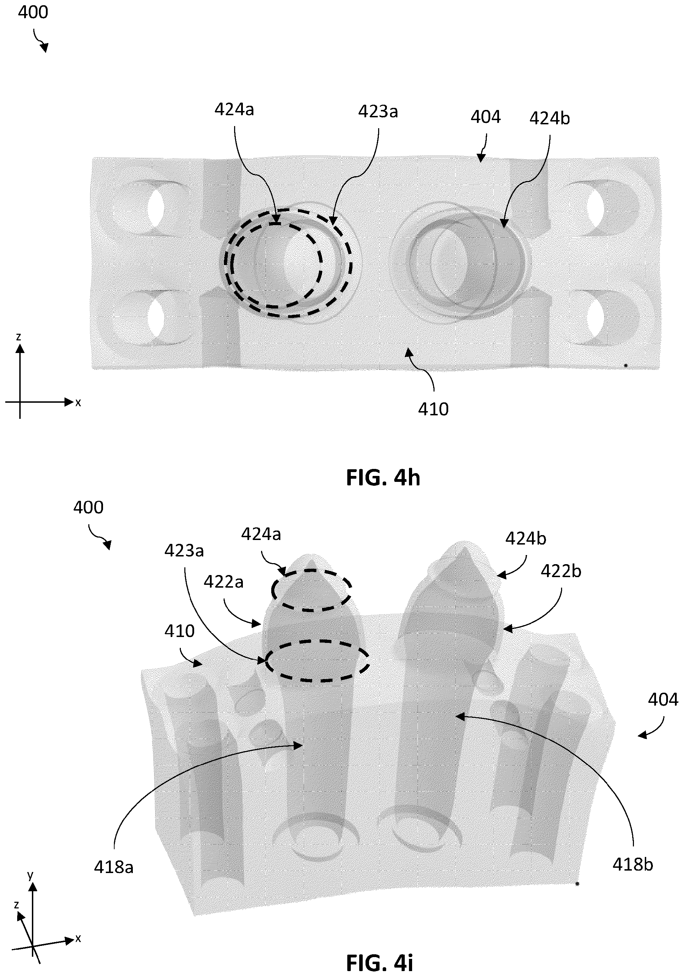

FIGS. 4h and 4i are top down and perspective views of the sensor body 400. The views are simplified and semi-transparent, showing additional exaggerated examples of the impact of the upward (e.g., in the y direction) and/or outward (e.g., in the z direction) bulging fluid pressure stresses on the sensor housing 400. As shown, the fluid pressure stresses on the main body 404 results in the fluid conduits 418 and/or sensor tube 422 becoming distended into more of an oval, egg, and/or elliptical (rather than circular) shape where the sensor tubes 422 connect to the top wall 410 of the main body 404 of the sensor housing 400 (e.g., at a sensor tube-housing connection point 423). However, the use of sensor tubes 422 allows for the diaphragms 424 to be extended away and/or isolated from the main body 404 of the sensor housing 400, such that the diaphragms 424 experience significantly less of the bending and/or bulging stress, and remain approximately circular. The shapes of one diaphragm 424 and one sensor tube-housing connection point 423 are approximately outlined in dotted lines FIGS. 4h and 4i to illustrate this situation.

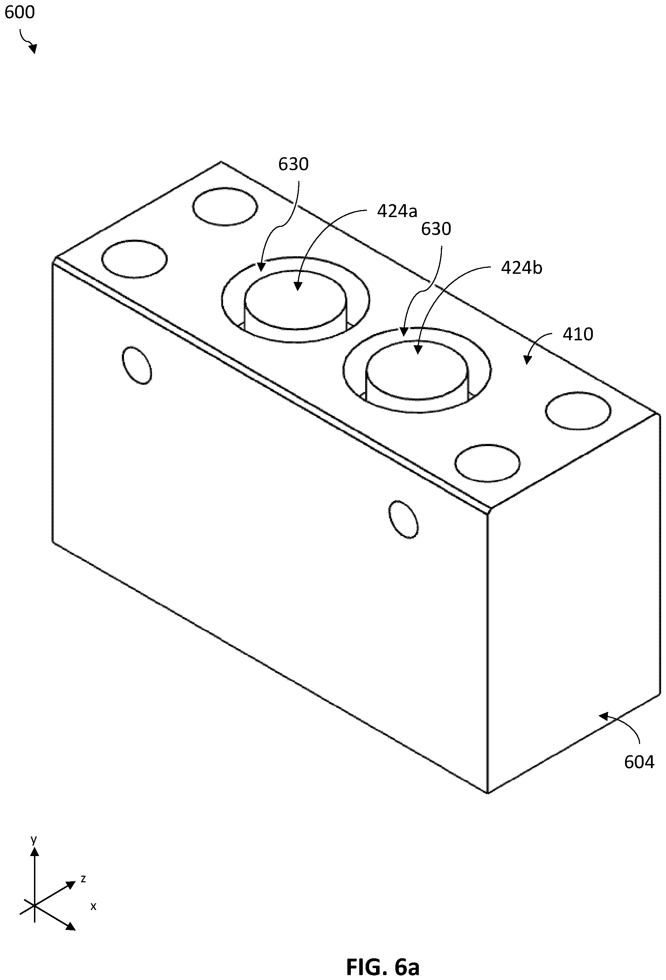

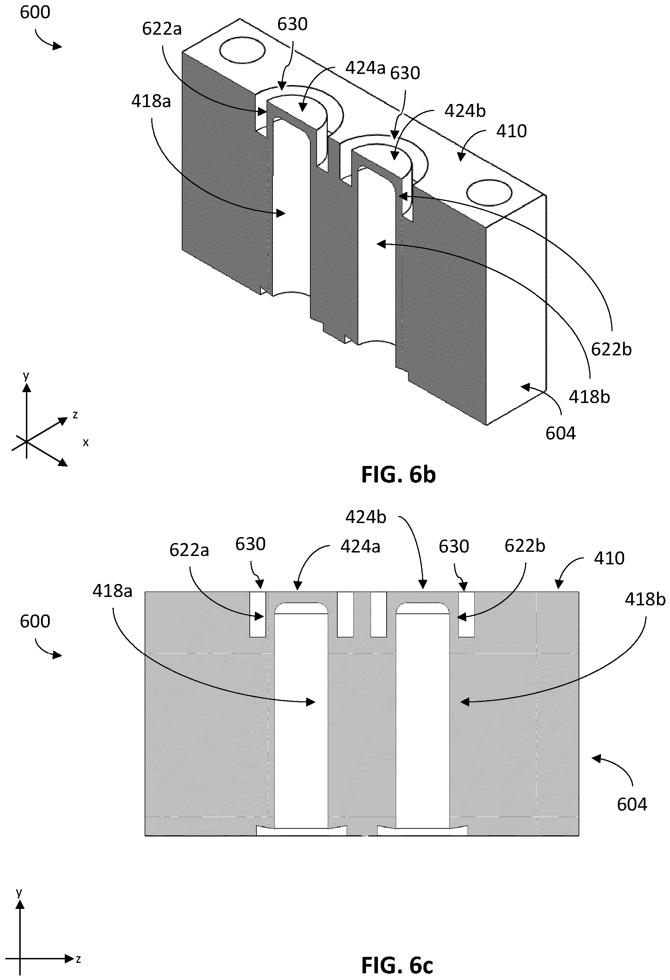

FIGS 6a-6c show examples of a second alternative sensor housing 600 that may be used with the differential pressure sensor 200. The second alternative sensor housing 600 is similar to the first alternative sensor housing 500 of FIGS. 5a-5c in that the fluid conduits 418 extend only as far as the top wall 410, and the diaphragms 424 are approximately coplanar with the top wall 410. The second alternative sensor housing 600 is similar to the sensor housing 400 of FIGS. 4a-4f in that the second alternative sensor housing 600 includes second alternative sensor tubes 622.

Like the sensor tubes 422 of FIGS. 4a-4g, the second alternative sensor tubes 622 are separated from the second alternative main body 604 of the second alternative sensor housing 600. Like with the sensor tubes 422 of FIGS. 4a-4g, this separation and/or isolation of the second alternative sensor tubes 622 may help to isolate the diaphragms 424 and/or strain gauges 426 from most of the bending and/or bulging effects felt by the second alternative main body 604.

However, the separation of the second alternative sensor tubes 622 from the second alternative main body 604 is due to trepanned annular grooves 630 encircling the second alternative sensor tubes 622, rather than an extension of the second alternative sensor tubes 622 above the top wall 410. In the example of FIGS. 6a-6c, the annular grooves 630 are interposed between the second alternative main body 604 and the second alternative sensor tubes 622, such that the second alternative main body 604 encircles both the annular grooves 630 and the second alternative sensor tubes 622. In other respects, the second alternative sensor housing 600 may be similar (and/or identical) to the sensor housing 400 of FIGS. 4a-4g.

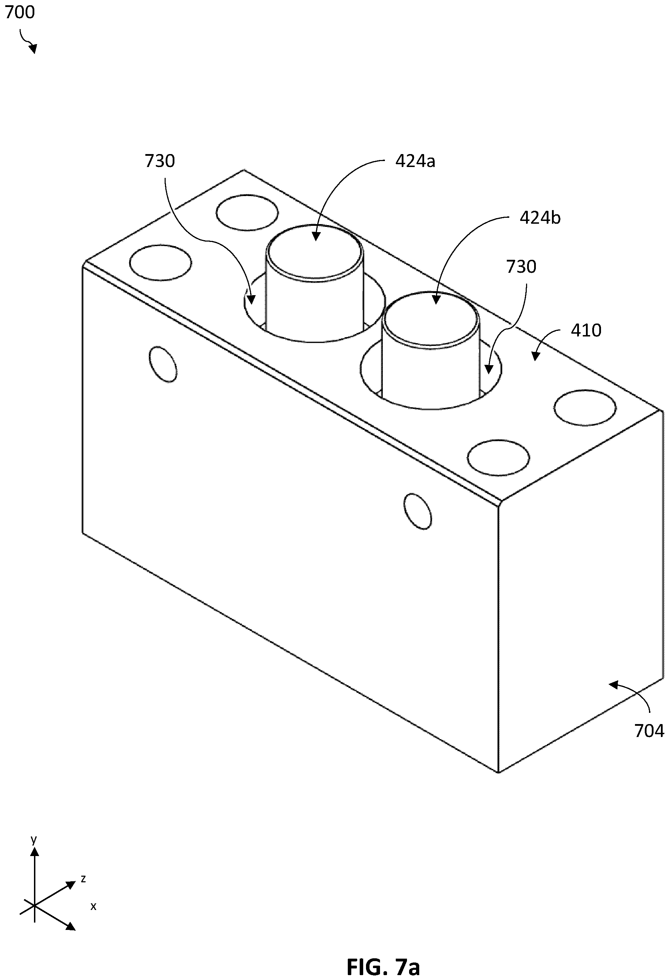

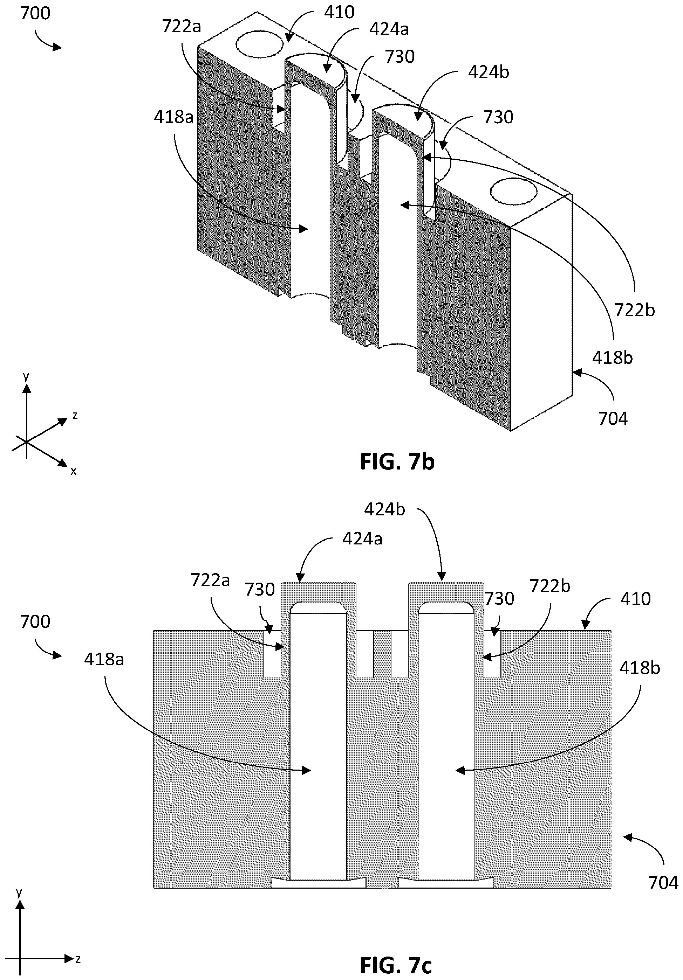

FIGS. 7a-7c show examples of a third alternative sensor housing 700 that may be used with the differential pressure sensor 200. As shown, the third alternative sensor housing 700 is similar (and/or identical) to the second alternative sensor housing 600. However, rather than being coplanar with the top wall 410, as with the second alternative sensor housing 600 of FIGS. 6a-6c, the third alternative sensor tubes 722 extend above the top wall 410 of the third alternative sensor housing 700, similar to the sensor housing 400 of FIGS. 4a-4g. In this configuration, the annular grooves 730 (and/or third alternative sensor housing 700) encircle only the portion of the third alternative sensor tubes 722 that are below the top wall 410 of the third alternative sensor housing 700.

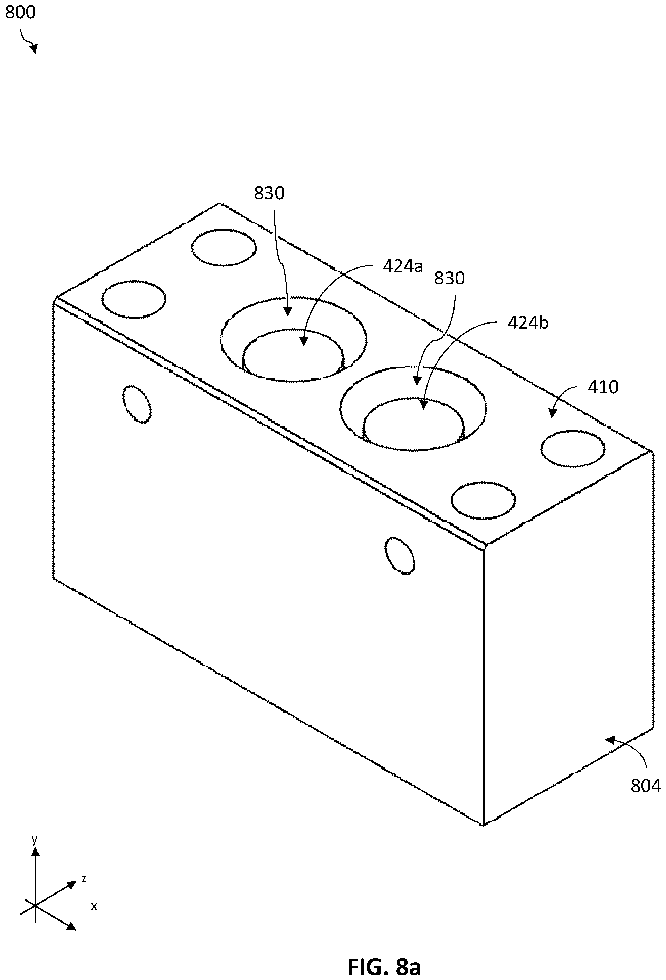

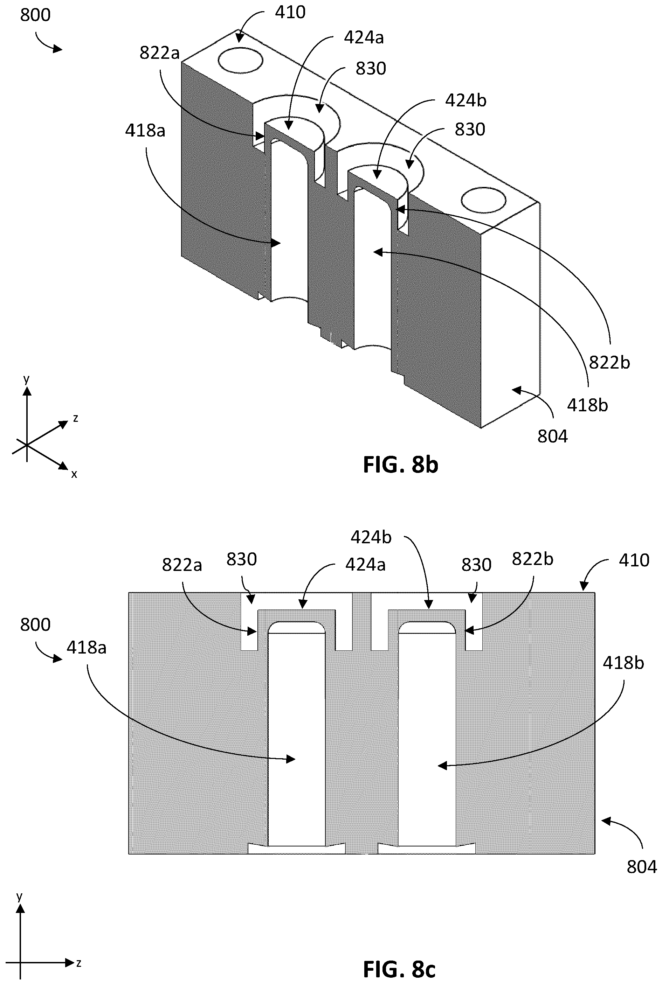

FIGS. 8a-8c show examples of a fourth alternative sensor housing 800 that may be used with the differential pressure sensor 200. As shown, the fourth alternative sensor housing 800 is similar (and/or identical) to the second alternative sensor housing 600 and/or third alternative sensor housing 700, except that the fourth alternative sensor tubes 822 are recessed below the top wall 410 of the third alternative sensor housing 700 (and/or within the third alternative sensor housing 700). In this configuration, the annular grooves 830 (and/or fourth alternative sensor housing 800) encircle the entirety of the fourth alternative sensor tubes 822, as well as the diaphragms 424, as well as some space above (e.g., in the direction of the positive y axis) the diaphragms 424.

In the examples of FIGS. 4a-4f, the differential pressure sensor 200 includes eight total strain gauges 426, with four strain gauges 426 bonded to each of the two diaphragms 424. However, as discussed above, the differential pressure sensor 200 may primarily use the strain gauges 426a1, 426a2, 426b1, and 426b2 bonded to the middle portion of the diaphragm 400 for pressure detection. FIG. 9a shows the four strain gauges the strain gauges 426a1, 426a2, 426b1, and 426b2 connected together in the sensing circuit 900a.

In some examples, the sensing circuit 900a is configured to generate an output signal 904 representative of a difference in resistance between the strain gauge 426a1 and/or strain gauge 426a2 bonded to the first diaphragm 424a, and the strain gauge 426b1 and/or strain gauge 426b2 bonded to the second diaphragm 424b. As the resistance of the central strain gauges 426 bonded to a particular diaphragm 242 should be approximately equal, the difference in resistance between strain gauges 426 of different diaphragms 424 may be a result of a difference in deflection (and/or distortion, deformation, etc.) of the diaphragms 424. And since the deflection (and/or distortion, deformation, etc.) of the diaphragms 424 is due to fluid pressures within the fluid conduits 418, the output signal may be representative of a difference in fluid pressure within the respective fluid conduits 418.

In the example of FIG. 9a, the sensing circuit 900a is further shown as including terminals 434. In the examples of FIGS. 4a-4f, the terminals 434 are attached to the top wall 410 of the sensing housing. In the example of FIG. 9a, the sensing circuit 900a is further shown as potentially including two conventional resistors 430 and/or two abradable resistors 432. In the examples of FIGS. 4a-4f, the conventional resistors 430 and abradable resistors 432 are also shown attached to the top wall 410 of the sensor housing 400.

Though not shown in FIGS. 5a-8c for the sake of simplicity, the conventional resistors 430, abradable resistors 432, and/or terminals 434 may be similarly attached to the top wall 410 of the first alternative sensor housing 500, second alternative sensor housing 600, third alternative sensor housing 700, and/or fourth alternative sensor housing 800. Additionally, the strain gauges 426 may be attached to diaphragms 424 of the first alternative sensor housing 500, second alternative sensor housing 600, third alternative sensor housing 700, and/or fourth alternative sensor housing 800.

In the example of FIG. 9a, the sensing circuit 900a is a modified Wheatstone bridge, with the strain gauges 426 forming the primary resistive elements of the Wheatstone bridge. As shown, strain gauge 426a1 and strain gauge 426b1 are wired together in series, strain gauge 426a2 and strain gauge 426b2 are wired together in series, and those two series are wired in parallel to one another with respect to a power input 902 (and/or power input pins) of the sensor I/O connector 304. In some examples, the power input 902 (and/or power input pins) of the sensor I/O connector 304 may be connected to a power source of the hydraulic system 100 (e.g., via the actuator controller 120).

In the example of FIG. 9a, terminal 434b and terminal 434d of the sensing circuit 900a are connected to an output 904 (and/or output signal pins) of the sensor I/O connector 304. In some examples, when the voltage across terminal 434b and terminal 434d (and/or current flowing from terminal 434b to terminal 434d) is zero, the output 904 of the sensor I/O connector 304 will be zero.

In some examples, a zero output 904 of the sensor I/O connector 304 may be the result of the strain gauge 426a1 and/or strain gauge 426a2 having a resistance approximately equal to the resistance of the strain gauge 426b1 and/or strain gauge 426b2. In some examples, the strain gauge 426a1 and/or strain gauge 426a2 having a resistance approximately equal to the resistance of the strain gauge 426b1 and/or strain gauge 426b2 may occur when the deflection of the diaphragm 424a is approximately equal to the deflection of the diaphragm 424b. In some examples, the deflection of the diaphragm 424a is approximately equal to the deflection of the diaphragm 424b when fluid pressure within fluid conduit 418a is approximately the same as the fluid pressure within fluid conduit 418b. Thus, in some examples, a zero output 904 of the sensor I/O connector 304 may be indicative of fluid pressure within fluid conduit 418a being approximately the same as the fluid pressure within fluid conduit 418b.

In the example of FIG. 9a, the conventional resistors 430 are depicted in dashed lines showing how they might potentially be placed in series or parallel (e.g., as a shunt resistor) with the strain gauge 426a1. In some examples, the conventional resistors 430 may be placed in series and/or in parallel with strain gauge 426a1 to balance out the resistances in the two parallel branches of the sensing circuit 900a. While shown as being applied to the sensing circuit 900a in series or in parallel with strain gauge 426a1 for the sake of clarity, persons of ordinary skill will understand that the conventional resistors 430 could alternatively be put in series and/or in parallel with strain gauge 426a2, strain gauge 426b1, or strain gauge 426b2.

For example, a conventional resistor 430 may be placed in series with strain gauge 426a to balance the sensing circuit 900 if the diaphragm 424a to which the strain gauge 426a1 is attached was (e.g., accidentally) machined to be less sensitive/responsive (and/or thicker) than the other diaphragm 424b. As another example, a conventional resistor 430 may be placed in parallel with strain gauge 426b1 and strain gauge 426b2 if the diaphragm 424b to which the strain gauge 426b1 and strain gauge 426b2 were attached was (e.g., accidentally) machined to be more sensitive/responsive (and/or thinner) than the other diaphragm 424a.

In the example of FIG. 9a, each abradable resistors 432 is depicted in dashed lines showing how they might be potentially placed in the sensing circuit 900 if needed. As shown, each abradable resistor 432 may be used in place of a terminal 434 (and/or includes its own internal terminal 434). Each abradable resistor 432 essentially comprises two resistors 432a and 432b positioned on either sides of the terminal 434. In some examples, the resistance of each resistor 432a/432b of the abradable resistor 432 may be modified through abrasion. In some examples, one of the abradable resistors 432 (e.g., replacing terminal 434c) may be used for balancing the Wheatstone bridge, while the other abradable resistor 432 (e.g., replacing terminal 434d) may be used for temperature compensation. While shown as replacing terminals 434c and 434d, in some examples, the abradable resistors may instead replace 434a and/or 434b.

While the sensing circuit 900a of FIG. 9a is shown as a bridge including the four strain gauges 426a1, 426a2, 426b1, and 426b2, FIG. 9b shows a sensing circuit 900b that includes all eight strain gauges 426 and two bridges. However, such a configuration may be more complicated and/or require more power.

Though the sensing circuits 900 of FIGS. 9a-9b are shown in a particular configuration, in some examples, the sensing circuit 900 may be differently configured. In some examples, the sensing circuit 900 may use different sensing elements (e.g., instead of, and/or in addition to, the strain gauges 426). For example, the differential pressure sensor 400 may include sensors 299 that detect and/or measure the deflection of the diaphragms 424 (and/or sensor tubes 422) using different means (e.g., optical, ultrasonic, etc.). FIG. 2, for example, shows sensors 299 connected to the sensing circuit 900 and enclosed between the sensor cover 300 and sensor housing 400. In some examples, the sensors 299 may be connected or disconnected to the sensor housing 400. In some examples, the sensors 299 may instead be connected to the sensor cover 300. In some examples, the sensing circuity 900 may instead, or additionally, use electrical signals and/or characteristics of the sensors 299 to determine the pressure differential.

While the sensing circuits 900 of FIGS. 9a-9b are shown as analog circuits, in some examples, the sensing circuit(s) 900 may be digital and/or include one or more digital elements (e.g., analog to digital converter(s)). In some examples, one or more of the strain gauges 426 may be connected to a processing chip, such as a digital signal processor, and the processing chip may implement one or more functions of the sensing circuit(s) 900. In some examples, one or more amplifiers may be included in the sensing circuit(s) 900 to amplify the output of the sensing circuit(s) 900.

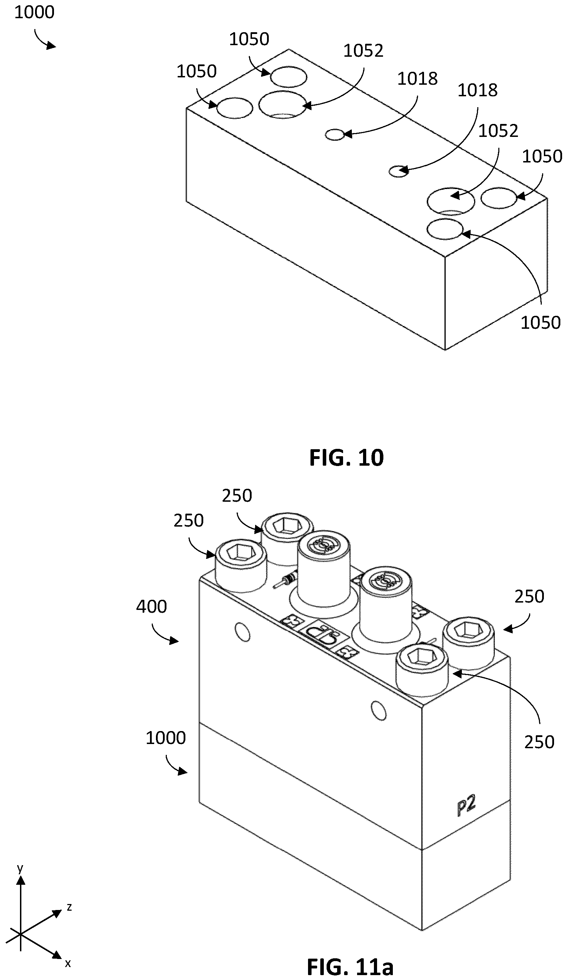

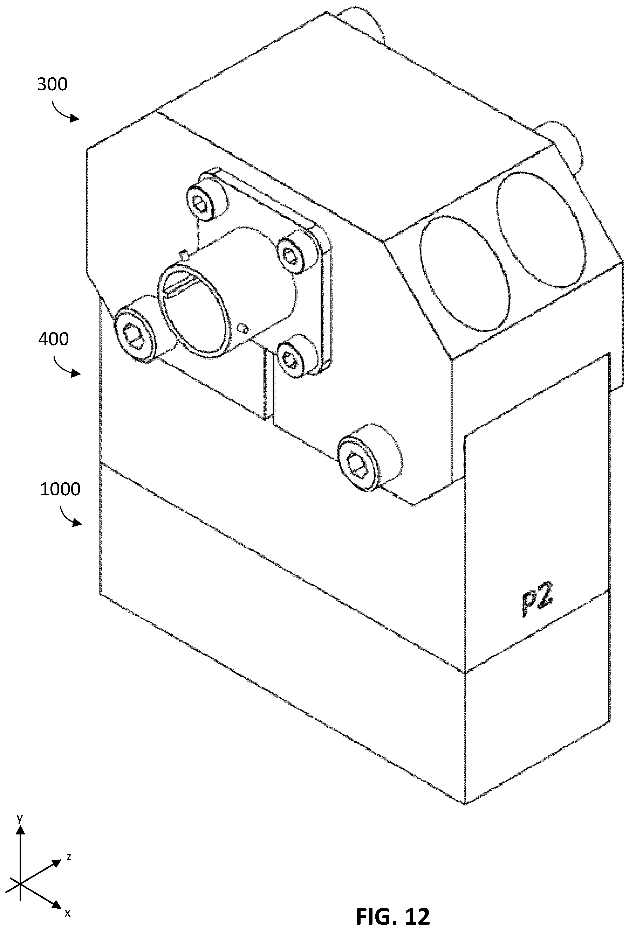

FIG. 10 shows an example of an adapter 1000 of the differential pressure sensor 200. FIGS. 11a-11e show the adapter 1000 attached to the sensor housing 400. FIG. 12 shows the adapter 1000 attached to the sensor housing 400 and sensing cover 300.

In the example of FIG. 10, the adapter 1000 includes manifold fastener channels 1050 configured to align with the manifold fastener channels 350 of the sensor cover 300 and/or manifold fastener conduits 450 of the sensor housing 400. In some examples, the manifold fastener channels 1050 of the adapter 1000 are configured to receive the manifold fasteners 250, so as to attach the cover 300 and/or sensor housing 400 to the adapter 1000. In some examples, the cover 300 and/or sensor housing 400 may be attached to the adapter 1000 via the manifold fasteners 250 in much the same way as the cover 300 and/or sensor housing 400 may be attached to the manifold 150. FIGS. 11c and 11e show the manifold fasteners 250 attaching the sensor housing 400 to the adapter 1000 via the manifold fastener channels 1050.

In the example of FIG. 10, the adapter 1000 additionally includes adapter fastener channels 1052. In some examples, the adapter fastener channels 1052 may be aligned with complementary channels of the manifold 150. Adapter fasteners 1054 may thereafter be inserted through the adapter fastener channels 1052 and/or complementary channels of the manifold 150 to attach the adapter 1000 to the manifold 150. FIG. 11d shows an example of adapter fasteners 1054 inserted through the adapter fastener channels 1052 of the adapter 1000.

In some examples, the adapter 1000 may be attached to the sensor cover 300, sensor housing 400, and/or manifold 150 to retrofit the differential pressure sensor 200 for use with an existing hydraulic system 100. For example, the differential pressure sensor 200 may be used as a replacement for a differential pressure sensor of a different design, and thus the existing hydraulic system 100 might be configured for the differential pressure sensor of the different design.

In the examples of FIGS. 10 and 11d, the retrofitting function of the adapter 1000 is illustrated through adapter input ports 1016 and adapter fluid conduits 1018 of the adapter 1000 that are shown as being smaller than the input ports 416 and fluid conduits 418 of the sensor housing 400. In some examples, the size of the adapter input ports 1016 and adapter fluid conduits 1018 of the adapter 1000 may correspond to the size of the fluid lines of the manifold 150 on the existing hydraulic system 100 (and/or the ports/conduits of the sensor being replaced). While shown as being smaller in FIGS. 10 and 1 1d as an example, in some examples, the adapter input ports 1016 and/or adapter fluid conduits 1018 of the adapter 1000 may instead be larger than the input ports 416 and/or fluid conduits 418 of the sensor housing 400.

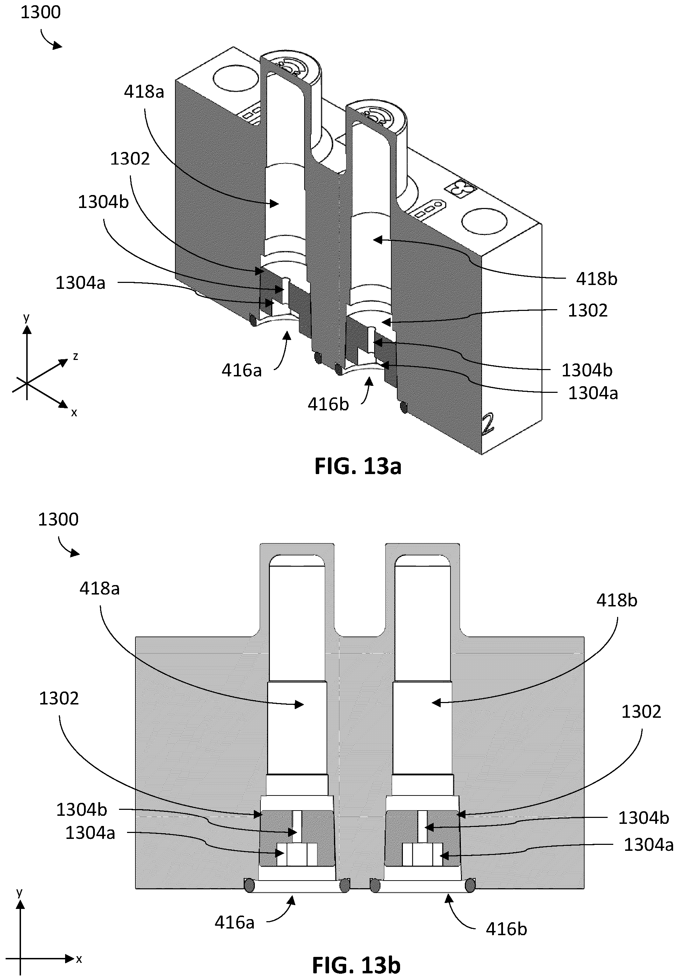

FIGS. 13a-13b show examples of a fifth alternative sensor housing 1300 that may be used with the differential pressure sensor 200. As shown, the fifth alternative sensor housing 1300 is similar to the sensor housing 400. However, the fifth alternative sensor housing 1300 also includes plugs 1302 fitted within its fluid conduits 418. In some examples, the plugs 1302 may also be included in the sensor housing 400 (and/or alternative sensor housings 500, 600, 700, 800, etc.).

In the examples of FIGS. 13a-13b the plugs 1302 are connected to the fifth alternative sensor housing 1300 within the fluid conduits 418. In some examples, the plugs 1302 may include engagement features (e.g., screw threads) that engage complementary engagement features formed within the fluid conduits 418. In some examples, the plugs 1302 may be friction fit within the fluid conduits 418 of the fifth alternative sensor housing 1300.

Within each plug 1302 is a hollow plug shaft 1304 that extends through the body of each plug 1302. As shown, the plug shaft 1304 consists of a wider shaft 1304a nearer the input port 416, and a thinner shaft 1304b farther from the input port 416. The wider shaft 1304a is hexagon shaped, so as to accommodate a hex wrench, for example. In some examples, a hex wrench may use the wider shaft 1304a to help connect the plug 1302 to the fifth alternative sensor housing 1300. Both the wider shaft 1304a and thinner shaft 1304b has a diameter smaller than that of each input port 416. In some examples, fluid may enter into the fluid conduits 418 via the input ports 416, then move through the plug shaft 1304 into the fluid conduits 418.

In some examples, in the absence of the plugs 1302, fluid flowing in, out, and/or across the input ports 416 may create a Helmholtz resonance. The Helmholtz resonance may, in turn, cause vibrations that negatively impact the measurements of the differential pressure sensor 200 (e.g., via the strain gauges 426). The positioning of the plugs 1302 within the fluid conduits 418 just past the input ports 416, with the smaller diameter plug shafts 1304, may serve to decrease and/or reduce the Helmholtz resonance, and thereby help to maintain the efficient and/or effective operation of the differential pressure sensor 200.

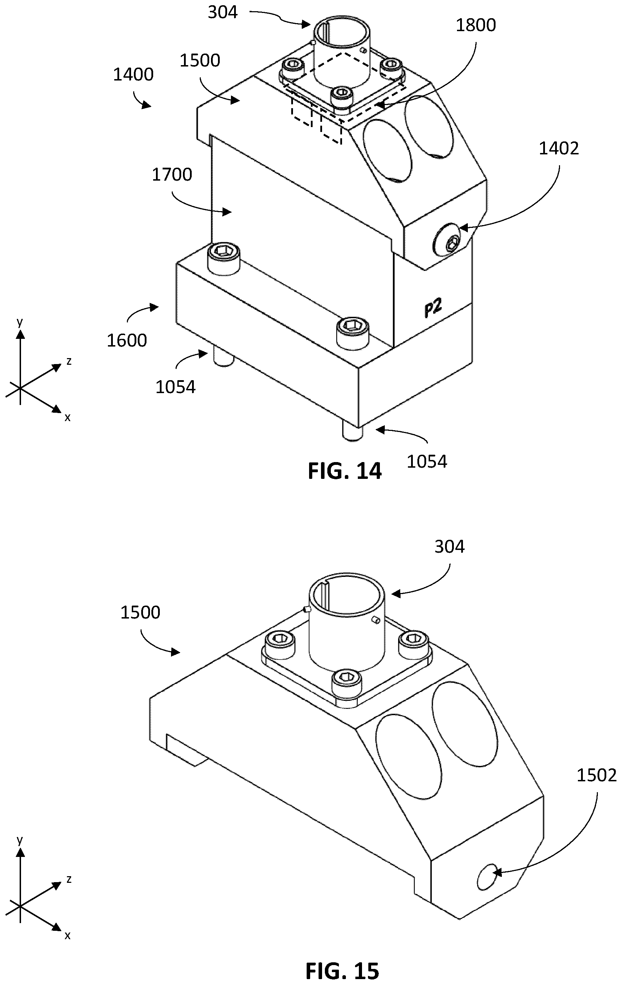

FIG. 14 shows an example of an alternative differential pressure sensor 1400 and alternative adapter 1600. The alternative differential pressure sensor 1400 shown in FIG. 14 is similar to the differential pressure sensor 200 shown in FIG. 2. For example, where the differential pressure sensor 200 of FIG. 2 includes a sensor cover 300, sensor housing 400, and sensing circuit 900, the alternative differential pressure sensor 1400 similarly includes an alternative sensor cover 1500, sixth alternative sensor housing 1700, and alternative sensing circuit 1800.

FIGS. 14-15 show examples of the alternative sensor cover 1500. As shown, the alternative sensor cover 1500 is similar (and/or identical) to the sensor cover 300 shown in FIG. 3, except for a few elements. For example, the sensor I/O connector 304 is attached to a top of the alternative sensor cover 1500 in the examples of FIGS. 14-15 (rather than being attached to a front face, as with the sensor cover 300 of FIGS. 2-3). The alternative sensor cover 1500 is also shown as being attached to a sixth alternative sensor housing 1700 via screw fasteners 1402 inserted through aligned cover fastener holes 1502/1702 on the sides of the alternative sensor cover 1500 and sixth alternative sensor housing 1700 (rather than via cover fasteners 202 inserted through aligned holes 302/402 on the front/back faces of the sensor cover 300 and sensor housing 400 shown in FIGS. 2-4).

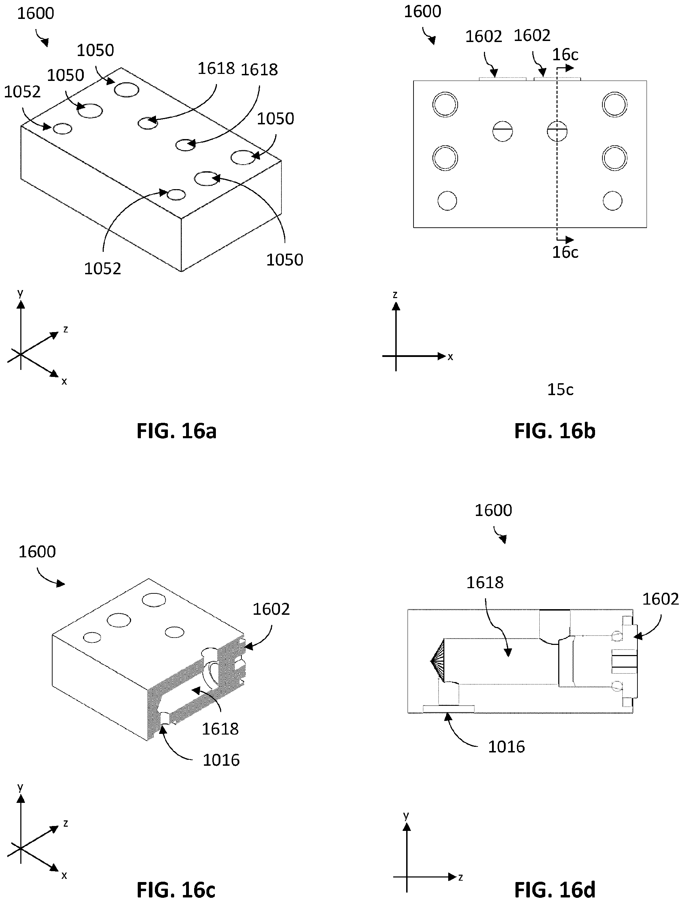

In the example of FIG. 14, the alternative differential pressure sensor 1400 and sixth alternative sensor housing 1700 are shown attached to an alternative adapter 1600. FIGS. 16a-16d show different views of the alternative adapter 1600. As shown, the alternative adapter 1600 is similar (and/or identical) to the adapter 1000 shown in FIGS. 10-12, except for a few differences.

For example, while the adapter 1000 shown in FIGS. 10-12 has adapter fluid conduits 1018 that extend approximately parallel to the y axis along their entire length, the alternative adapter 1600 includes alternative adapter fluid conduits 1618 that extend approximately parallel to the y axis at some parts, and extend approximately parallel to the z direction at other parts. Plugs 1602 are shown sealing openings of the z extending portion of the alternative adapter fluid conduits 1618 (e.g., in combination with O-rings). In some examples, the openings are created when machining at least the z directed portions of the alternative adapter fluid conduits 1618.

As another example, while the adapter 1000 shown in FIGS. 10-12 is shown sized to match a profile of the sensor housing 400, the alternative adapter 1600 shown in FIGS. 14 and 16a-16d has a larger profile than the sixth alternative sensor housing 1700. The larger profile of the alternative adapter 1600 (e.g., relative to the sixth alternative sensor housing 1700) allows for adapter fastener channels 1052 to be positioned out of alignment with the sixth alternative sensor housing 1700. This allows for the adapter fastener channels 1052 (and/or adapter fasteners 1054) to be more easily accessible (e.g., when the alternative adapter 1600 is attached to the sixth alternative sensor housing 1700).

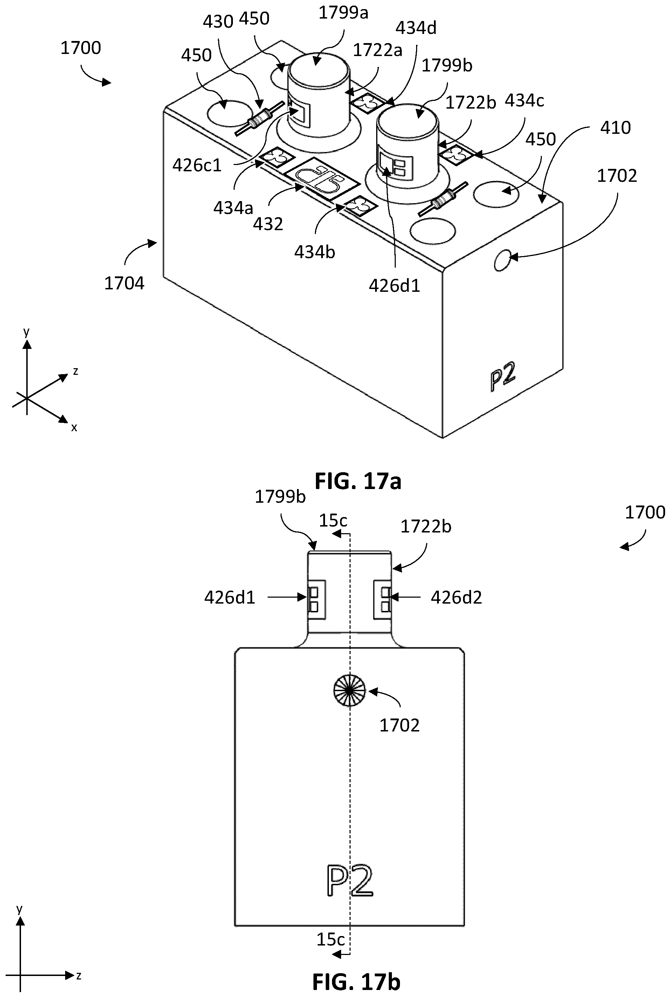

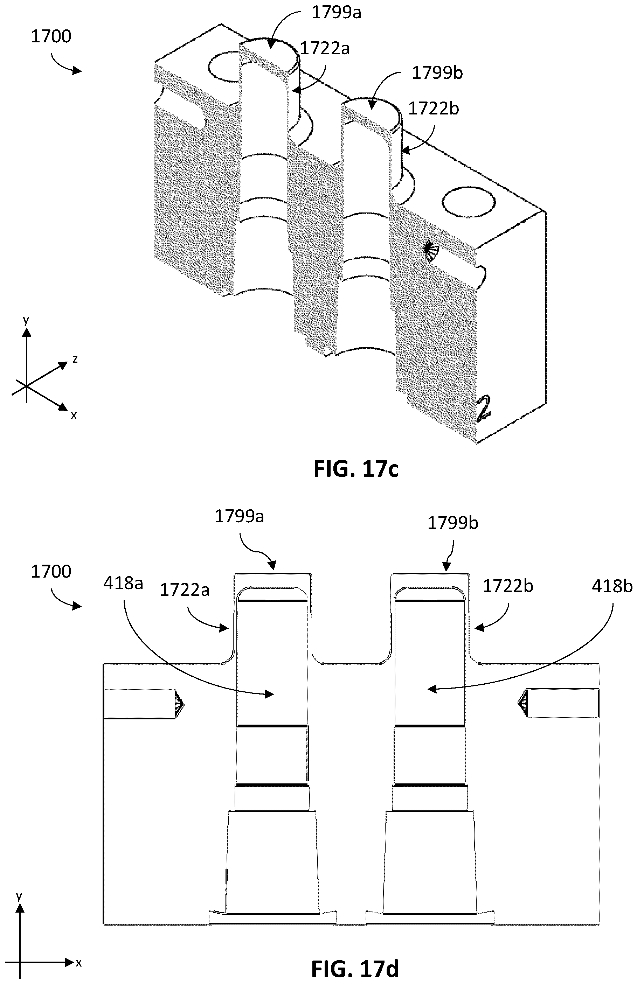

FIGS. 17a-17d show examples of a sixth alternative sensor housing 1700 used with the alternative differential pressure sensor 1400 of FIG. 14. As shown, the sixth alternative sensor housing 1700 is similar (and/or identical) to the sensor housing 400 of FIGS. 4a-4f, except for a few elements. For example, the sixth alternative sensor housing 1700 includes sixth alternative sensor tubes 1722 that are similar to the sensor tubes 400 of the sensor housing 400.

Like the sensor tubes 422 of FIGS. 4a-4g, the sixth alternative sensor tubes 1722 are separated from the second alternative main body 1704 of the sixth alternative sensor housing 1700. Like with the sensor tubes 422 of FIGS. 4a-4g, this separation and/or isolation of the sixth alternative sensor tubes 1722 may help to isolate the strain gauges 426 from most of the bending and/or bulging effects felt by the sixth alternative main body 1704.

However, unlike the sensor tubes 400 of the sensor housing 400, the sixth alternative sensor tubes 1722 (and/or fluid conduits 418) of the sixth alternative sensor housing 1700 terminate at sensor tube top walls 1799 instead of diaphragms 424. In some examples, the main body 1704 of the sixth alternative sensor housing 1700, the sixth alternative sensor tubes 1722, and the sensor tube top walls 1799 may comprise one solid and continuous machined piece of (e.g., steel and/or other metal) material, with no welded connections.

In the examples of FIGS. 17a-17d the sixth alternative sensor housing 1700 includes strain gauges 426 are attached, fastened, adhered, and/or otherwise bonded on opposite outer sides of the cylindrical sidewalls of the sixth alternative sensor tubes 1722 (e.g., instead of being attached to diaphragms 424). In the example of FIGS. 17a-17d, the cylindrical sidewalls of the sixth alternative sensor tubes 1722 are also shown as being substantially thinner than the sensor tube top walls 1799. In some examples, the relative thin width of the sidewalls of the sixth alternative sensor tubes 1722 allows for the fluid pressure of the hydraulic fluid in the fluid conduit 418 to force the sidewalls of the sixth alternative sensor tubes 1722 to deflect, distend, deform, and/or bend outwards (e.g., in the x and/or z directions). As the sidewalls of the sixth alternative sensor tubes 1722 distend/deform, so will the strain gauges 426.

In some examples, the resistance (and/or impedance) of each strain gauge 426 is dependent upon the extent to which its sensor tube sidewall stretches (and/or deflects, deforms, distends, etc.). In some examples, this arrangement allows the strain gauges 426 to measure hoop stress placed upon (and/or experienced by) the sixth alternative sensor tubes 1722. In some examples, positioning the strain gauges 426 on opposite sides of each sixth alternative sensor tube 1722 helps to ensure accurate and/or effective measurements, and/or useful differential pressure determinations.

In some examples, the sixth alternative sensor tubes 1722 of the sixth alternative sensor housing 1700 may be encircled by trepanned annular grooves, such as shown, for example, in FIGS. 6a-8c. While shown as extended away from the sixth alternative main body 1704 in the examples of FIGS. 17a-17d, in some examples, the sixth alternative sensor tubes 1722 of the sixth alternative sensor housing 1700 may instead be level with, or recessed within, the sixth alternative main body 1704, such as shown, for example, in FIGS. 6a-6c and 8a-8c.

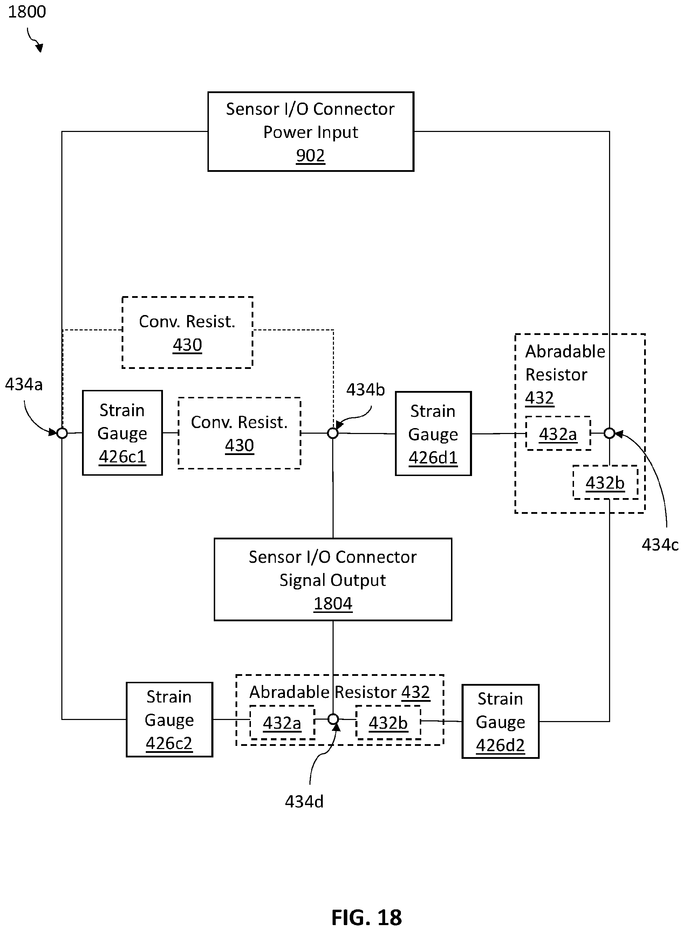

FIG. 18 shows an alternative sensing circuit 1800 that might be used with the alternative differential pressure sensor 1400. As shown, the alternative sensing circuit 1800 is similar (and/or identical) to the sensing circuit 900a of FIG. 9, except that strain gauges 426c1, 426c2, 426d1, 426d2 are used instead of strain gauges 426a1,426a2, 426b1, 426b2, and output signal 1804 is generated instead of output signal 904.

In some examples, the alternative sensing circuit 1800 is configured to generate the output signal 1804 (e.g., output via output signal pins of sensor I/O connector 304). In some examples, the output signal 1804 is representative of a difference in resistance between the strain gauges 426 bonded to different sixth alternative sensor tubes 1722.

In some examples, the output signal 1804 of the alternative sensing circuit 1800 is similar (and/or identical) to the output signal 904 of the sensing circuit 900a of FIG. 9, except that the output signal 1804 is representative of a difference in resistance between the strain gauge 426c1 and/or strain gauge 426c2, and the strain gauge 426d1 and/or strain gauge 426d2 (rather than strain gauges 426a1, 426a2, 426b1, 426b2). As the resistance of the strain gauges 426 bonded to a particular sixth alternative sensor tube 1722 should be approximately equal, the difference in resistance between strain gauges 426 of different diaphragms 424 may be a result of a difference in deflection (and/or distortion, deformation, etc.) of the sixth alternative sensor tubes 1722. And since the deflection (and/or distortion, deformation, etc.) of the sixth alternative sensor tubes 1722 is due to fluid pressures within the fluid conduits 418, the output signal may be representative of a difference in fluid pressure within the respective fluid conduits 418.

The differential pressure sensors 200/1400 disclosed herein have a unique design that makes it especially suited for dynamic, high pressure, hydraulic systems 100. For example, the one piece design of its sensor housing 400 (and/or alternative sensor housings 500, 600, 700, 800, 1300, 1700) increases the durability of the sensor 200/1400. Additionally, the use of foil (rather than, for example, piezoelectric) strain gauges 426 ensures continued functionality even under the unique stresses imposed by dynamic, high pressure, hydraulic systems 100. Furthermore, the sensor tubes 422 help to isolate the diaphragms 424 and strain gauges 426 from some of the bowing/bending stresses that the main body 404 of the sensor housing 400 may experience due to the intense fluid pressures.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

As used herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the terms "e.g.," and "for example" set off lists of one or more non-limiting examples, instances, or illustrations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, a control circuit may include digital and/or analog circuitry, discrete and/or integrated circuitry, microprocessors, DSPs, etc., software, hardware and/or firmware, located on one or more boards, that form part or all of a controller, and/or are used to control a welding process, and/or a device such as a power source or wire feeder.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory can be configured to store code, instructions, applications, software, firmware and/or data, and may be external, internal, or both with respect to the processor.

Certain embodiments of the invention are described in the following clauses:
Clause 1. A differential pressure sensor, comprising:
   a sensor housing comprising a first input port and a second input port;
   a first sensor tube connected to the sensor housing at a first tube housing end, the first sensor tube extending from the first tube housing end to a first conduit end that is isolated from the sensor housing;
   a second sensor tube connected to the sensor housing at a second tube housing end, the second sensor tube extending from the second tube housing end to a second conduit end that is isolated from the sensor housing;
   a first fluid conduit extending from the first input port, through the sensor housing and the first sensor tube, to the first conduit end, the first sensor tube being configured to experience a first deflection in response to a first fluid pressure within the first fluid conduit;
   a second fluid conduit extending from the second input port, through the sensor housing and the second sensor tube, to the second conduit end, the second sensor tube being configured to experience a second deflection in response to a second fluid pressure within the second fluid conduit;
   a first circuit element bonded to the first sensor tube, the first circuit element having a first electrical characteristic that is dependent upon the first deflection of the first sensor tube;
   a second circuit element bonded to the second sensor tube, the second circuit element having a second electrical characteristic that is dependent upon the second deflection of the second sensor tube; and
   a sensing circuit electrically connected to the first circuit element and the second circuit element, the sensing circuit being configured to determine a pressure differential between the first fluid pressure within the first fluid conduit and the second fluid pressure within the second fluid conduit based on the first electrical characteristic of the first circuit element and the second electrical characteristic of the second circuit element.
Clause 2. The differential pressure sensor of clause 1, wherein the sensor housing further comprises a first housing end and a second housing end opposite the first housing end, the first housing end comprising the first input port and the second input port, and the second housing end connecting to the first sensor tube or second sensor tube at the first tube housing end or the second tube housing end.
Clause 3. The differential pressure sensor of clause 1, wherein the first sensor tube or the second sensor tube is recessed within the sensor housing, such that the sensor housing encircles the first sensor tube or the second sensor tube.
Clause 4. The differential pressure sensor of clause 1, wherein the sensor housing is comprised of a metal material.
Clause 5. The differential pressure sensor of clause 1, wherein the sensor housing further comprises:
   a first groove encircling a first portion of the first sensor tube, such that the first portion of the first sensor tube is isolated from the sensor housing, and
   a second groove encircling a second portion of the second sensor tube, such that the second portion of the second sensor tube is isolated from the sensor housing.
Clause 6. The differential pressure sensor of clause 1, wherein the first circuit element comprises a first resistor, the second circuit element comprises a second resistor, the first electrical characteristic comprises a first resistance, and the second electrical characteristic comprises a second resistance.
Clause 7. The differential pressure sensor of clause 6, wherein the first circuit element comprises a first strain gauge and the second circuit element comprises a second strain gauge.
Clause 8. The differential pressure sensor of clause 7, wherein the first strain gauge and the second strain gauge are comprised of foil.
Clause 9. The differential pressure sensor of clause 1, wherein the sensor housing, the first sensor tube, and the second sensor tube comprise a single continuous machined piece of metal.
Clause 10. The differential pressure sensor of clause 1, wherein:
   the first sensor tube comprises a first inner sensor tube portion within the first fluid conduit, and a first outer sensor tube portion outside the first fluid conduit,
   the second sensor tube comprises a second inner sensor tube wall within the second fluid conduit, and a second outer sensor tube portion outside the second fluid conduit,
   the first circuit element is bonded to the first outer sensor tube portion, and
   the second circuit element is bonded to the second outer sensor tube portion.
Clause 11. A hydraulic system, comprising:
   a hydraulic device comprising a device housing enclosing a first fluid volume separated from a second fluid volume; and
   a differential pressure sensor comprising:
      a sensor housing comprising a first input port in fluid communication with the first fluid volume and a second input port in fluid communication with the second fluid volume,
      a first sensor tube connected to the sensor housing at a first tube housing end, the first sensor tube extending from the first tube housing end to a first conduit end that is isolated from the sensor housing,
      a second sensor tube connected to the sensor housing at a second tube housing end, the second sensor tube extending from the second tube housing end to a second conduit end that is isolated from the sensor housing,
      a first fluid conduit extending from the first input port, through the sensor housing and the first sensor tube, to the first conduit end, the first sensor tube being configured to experience a first deflection in response to a first fluid pressure within the first fluid conduit,
      a second fluid conduit extending from the second input port, through the sensor housing and the second sensor tube, to the second conduit end, the second sensor tube being configured to experience a second deflection in response to a second fluid pressure within the second fluid conduit,
      a first circuit element bonded to the first sensor tube, the first circuit element having a first electrical characteristic that is dependent upon the first deflection of the first sensor tube,
      a second circuit element bonded to the second sensor tube, the second circuit element having a second electrical characteristic that is dependent upon the second deflection of the second sensor tube, and
      a sensing circuit electrically connected to the first circuit element and the second circuit element, the sensing circuit being configured to determine a pressure differential between fluid in the first fluid volume of the hydraulic device and fluid in the second fluid volume of the hydraulic device based on the first electrical characteristic of the first circuit element and the second electrical characteristic of the second circuit element.
Clause 12. The hydraulic system of clause 11, wherein the sensor housing further comprises a first housing end and a second housing end opposite the first housing end, the first housing end comprising the first input port and the second input port, and the second housing end connecting to the first sensor tube or second sensor tube at the first tube housing end or the second tube housing end.
Clause 13. The hydraulic system of clause 11, wherein the first sensor tube or the second sensor tube is recessed within the sensor housing, such that the sensor housing encircles the first sensor tube or the second sensor tube.
Clause 14. The hydraulic system of clause 11, wherein the sensor housing is comprised of a metal material.
Clause 15. The hydraulic system of clause 11, wherein the sensor housing further comprises:
   a first groove encircling a first portion of the first sensor tube, such that the first portion of the first sensor tube is isolated from the sensor housing, and
   a second groove encircling a second portion of the second sensor tube, such that the second portion of the second sensor tube is isolated from the sensor housing.
Clause 16. The hydraulic system of clause 11, wherein the first circuit element comprises a first resistor, the second circuit element comprises a second resistor, the first electrical characteristic comprises a first resistance, and the second electrical characteristic comprises a second resistance.
Clause 17. The hydraulic system of clause 16, wherein the first circuit element comprises a first strain gauge and the second circuit element comprises a second strain gauge.
Clause 18. The hydraulic system of clause 17, wherein the first strain gauge and the second strain gauge are comprised of foil.
Clause 19. The hydraulic system of clause 11, wherein the sensor housing, the first sensor tube, and the second sensor tube comprise a single continuous machined piece of metal.
Clause 20. The hydraulic system of clause 11, wherein:
   the first sensor tube comprises a first inner sensor tube portion within the first fluid conduit, and a first outer sensor tube portion outside the first fluid conduit,
   the second sensor tube comprises a second inner sensor tube portion within the second fluid conduit, and a second outer sensor tube portion outside the second fluid conduit,
   the first circuit element is bonded to the first outer sensor tube portion, and
   the second circuit element is bonded to the second outer sensor tube portion.

## Claims

1. A differential pressure sensor, comprising:
a sensor housing comprising a first input port and a second input port;
a first sensor tube connected to the sensor housing at a first tube housing end, the first sensor tube extending from the first tube housing end to a first conduit end that is isolated from the sensor housing;
a second sensor tube connected to the sensor housing at a second tube housing end, the second sensor tube extending from the second tube housing end to a second conduit end that is isolated from the sensor housing;
a first fluid conduit extending from the first input port, through the sensor housing and the first sensor tube, to the first conduit end, the first sensor tube being configured to experience a first deflection in response to a first fluid pressure within the first fluid conduit;
a second fluid conduit extending from the second input port, through the sensor housing and the second sensor tube, to the second conduit end, the second sensor tube being configured to experience a second deflection in response to a second fluid pressure within the second fluid conduit;
a first circuit element bonded to the first sensor tube, the first circuit element having a first electrical characteristic that is dependent upon the first deflection of the first sensor tube;
a second circuit element bonded to the second sensor tube, the second circuit element having a second electrical characteristic that is dependent upon the second deflection of the second sensor tube; and
a sensing circuit electrically connected to the first circuit element and the second circuit element, the sensing circuit being configured to determine a pressure differential between the first fluid pressure within the first fluid conduit and the second fluid pressure within the second fluid conduit based on the first electrical characteristic of the first circuit element and the second electrical characteristic of the second circuit element.

2. The differential pressure sensor of claim 1, wherein the sensor housing further comprises a first housing end and a second housing end opposite the first housing end, the first housing end comprising the first input port and the second input port, and the second housing end connecting to the first sensor tube or second sensor tube at the first tube housing end or the second tube housing end, or
wherein the first sensor tube or the second sensor tube is recessed within the sensor housing, such that the sensor housing encircles the first sensor tube or the second sensor tube.

3. The differential pressure sensor of claim 1, wherein the sensor housing is comprised of a metal material.

4. The differential pressure sensor of claim 1, wherein the sensor housing further comprises:
a first groove encircling a first portion of the first sensor tube, such that the first portion of the first sensor tube is isolated from the sensor housing, and
a second groove encircling a second portion of the second sensor tube, such that the second portion of the second sensor tube is isolated from the sensor housing.

5. The differential pressure sensor of claim 1, wherein the first circuit element comprises a first resistor, the second circuit element comprises a second resistor, the first electrical characteristic comprises a first resistance, and the second electrical characteristic comprises a second resistance.

6. The differential pressure sensor of claim 5, wherein the first circuit element comprises a first strain gauge and the second circuit element comprises a second strain gauge, and optionally wherein the first strain gauge and the second strain gauge are comprised of foil.

7. The differential pressure sensor of claim 1, wherein the sensor housing, the first sensor tube, and the second sensor tube comprise a single continuous machined piece of metal.

8. The differential pressure sensor of claim 1, wherein:
the first sensor tube comprises a first inner sensor tube portion within the first fluid conduit, and a first outer sensor tube portion outside the first fluid conduit,
the second sensor tube comprises a second inner sensor tube wall within the second fluid conduit, and a second outer sensor tube portion outside the second fluid conduit,
the first circuit element is bonded to the first outer sensor tube portion, and
the second circuit element is bonded to the second outer sensor tube portion.

9. A hydraulic system, comprising:
a hydraulic device comprising a device housing enclosing a first fluid volume separated from a second fluid volume; and
a differential pressure sensor comprising:
a sensor housing comprising a first input port in fluid communication with the first fluid volume and a second input port in fluid communication with the second fluid volume,
a first sensor tube connected to the sensor housing at a first tube housing end, the first sensor tube extending from the first tube housing end to a first conduit end that is isolated from the sensor housing,
a second sensor tube connected to the sensor housing at a second tube housing end, the second sensor tube extending from the second tube housing end to a second conduit end that is isolated from the sensor housing,
a first fluid conduit extending from the first input port, through the sensor housing and the first sensor tube, to the first conduit end, the first sensor tube being configured to experience a first deflection in response to a first fluid pressure within the first fluid conduit,
a second fluid conduit extending from the second input port, through the sensor housing and the second sensor tube, to the second conduit end, the second sensor tube being configured to experience a second deflection in response to a second fluid pressure within the second fluid conduit,
a first circuit element bonded to the first sensor tube, the first circuit element having a first electrical characteristic that is dependent upon the first deflection of the first sensor tube,
a second circuit element bonded to the second sensor tube, the second circuit element having a second electrical characteristic that is dependent upon the second deflection of the second sensor tube, and
a sensing circuit electrically connected to the first circuit element and the second circuit element, the sensing circuit being configured to determine a pressure differential between fluid in the first fluid volume of the hydraulic device and fluid in the second fluid volume of the hydraulic device based on the first electrical characteristic of the first circuit element and the second electrical characteristic of the second circuit element.

10. The hydraulic system of claim 9, wherein the sensor housing further comprises a first housing end and a second housing end opposite the first housing end, the first housing end comprising the first input port and the second input port, and the second housing end connecting to the first sensor tube or second sensor tube at the first tube housing end or the second tube housing end, or
wherein the first sensor tube or the second sensor tube is recessed within the sensor housing, such that the sensor housing encircles the first sensor tube or the second sensor tube.

11. The hydraulic system of claim 9, wherein the sensor housing is comprised of a metal material, or
wherein the sensor housing further comprises:
a first groove encircling a first portion of the first sensor tube, such that the first portion of the first sensor tube is isolated from the sensor housing, and
a second groove encircling a second portion of the second sensor tube, such that the second portion of the second sensor tube is isolated from the sensor housing.

12. The hydraulic system of claim 9, wherein the first circuit element comprises a first resistor, the second circuit element comprises a second resistor, the first electrical characteristic comprises a first resistance, and the second electrical characteristic comprises a second resistance.

13. The hydraulic system of claim 12, wherein the first circuit element comprises a first strain gauge and the second circuit element comprises a second strain gauge, and optionally wherein the first strain gauge and the second strain gauge are comprised of foil.

14. The hydraulic system of claim 9, wherein the sensor housing, the first sensor tube, and the second sensor tube comprise a single continuous machined piece of metal.

15. The hydraulic system of claim 9, wherein:
the first sensor tube comprises a first inner sensor tube portion within the first fluid conduit, and a first outer sensor tube portion outside the first fluid conduit,
the second sensor tube comprises a second inner sensor tube portion within the second fluid conduit, and a second outer sensor tube portion outside the second fluid conduit,
the first circuit element is bonded to the first outer sensor tube portion, and
the second circuit element is bonded to the second outer sensor tube portion.
